# EUROPEAN PATENT SPECIFICATION

(11) **EP 3 511 143 B1**
(45) Date of publication and mention of the grant of the patent: **16.09.2020**
(21) Application number: 19155565.5
(22) Date of filing: 15.04.2011
(51) Int. Cl.: B29C 39/26, B29C 39/42, B29C 37/00, B29C 41/04, B29C 41/06, B29C 39/02, B01D 19/00, B01F 9/00

(54) **MOLDING METHOD**
FORMVERFAHREN
PROCÉDÉ DE MOULAGE

(30) Priority: 16.04.2010 JP 2010095372
(43) Date of publication of application: 17.07.2019
(62) Divisional of application: 17177217.1
(73) Proprietor: Kaga Sangyo Co Ltd, Aichi 460-0011 (JP)
(72) Inventor: MIZOGUCHI, Osamu, Nagoya-shi, Aichi 460-0011 (JP); NOMURA, Takayuki, Nagoya-shi, Aichi 460-0011 (JP); TSUJIKAWA, Hitoshi, Nagoya-shi, Aichi 460-0011 (JP); IKEDA, Yoshiki, Nagoya-shi, Aichi 460-0011 (JP)
(74) Representative: D Young & Co LLP

(56) References cited:
- JP-A- H11 104 404

## Description

### Technical Field

The invention relates to a method of molding a synthetic resin product from a liquid mixed material using a mold unit having a female mold and a male mold, which are selectively closely engaged with each other to define a cavity having a desired shape and are disengaged from each other.

### Background Art

There is a need for manufacturing high-precision products (e.g., mechanical parts, electric parts, electronic parts, or the like) by a method called molding. The material used for molding can be a mixture of different liquid materials, i.e., a mixed material, and these materials may include high-viscosity liquid materials.

However, especially when a molding technique is performed using a mixture of high-viscosity liquid materials, an undesirable possibility exists that minute air bubbles will be trapped in the materials during this process in case the materials are mixed and agitated without any special care.

Further, an additional possibility exists that high-viscosity liquid materials will trap ambient air while being injected into a mold, and the trapped air will end up as air bubbles entrained in the materials held in the mold. A still further unfavorable possibility exists that the molding will be performed using high-viscosity liquid materials, in which the inner surface of a mold (having, for example, very small gaps, undercuts, or the like) is not completely filled with the materials (i.e., in which the materials do not reach the entire inner surface of the mold).

It is possible to attempt to degas the mixed material prior to injecting the mixed material into a mold. However, an unwanted possibility exists that, when at least one of component materials of the mixed material has a high viscosity, if an attempt is made to degas the mixed material without any special care, air bubbles can become entrained in the mixed material.

In any event, if air bubbles are contained in the material in the mold or if the inner surface of the mold is not completely filled with the material, then the final molded product will have defects. That is, for example, the molded product will contain air bubbles (i.e., voids) inside, or the surface of the molded product will be damaged in parts.

For these reasons, up to now, there has been the need to agitate the mixed material while effectively degassing the material. As one technique proposed for satisfying this need, a technique of storing the mixed material in a container of a mixer, and simultaneously rotating and orbiting the container under vacuum using a mixer is known (for example, see Patent Document No. 1).

### Prior-art Reference

### Patent Document

Patent Document No. 1: Japanese Patent Application Publication No. HEI 11-104404

### Summary of the Invention

### Problem(s) that the Invention Attempts to Solve

Indeed, agitating a mixed material using the technique disclosed in Patent Document No. 1 may allow the mixed material to be effectively degassed before the mixed material is injected into a mold for molding, without any bubbles being entrained in the mixed material.

However, an undesirable possibility still exists that, when the mixed material is being injected into the mold for molding after it has been agitated/degassed, the mixed material will trap ambient air, and the trapped air will end up as air bubbles contained in the mixed material held in the mold for molding, and an unwanted possibility still exists that the molding will proceed with the inner surface of the mold not completely filled with the mixed material.

For these reasons, such a traditional technique cannot adequately eliminate the risk that the final molded product will contain air bubbles inside, or the risk that the surface of the molded product will be damaged in parts.

Therefore, the invention has been created to provide a method of molding a synthetic resin product from a liquid mixed material using a mold unit having a female mold and a male mold, which are closely engaged with each other in a selective manner to define a cavity having a desired shape, and are disengaged from each other, in order to mold a final product with greater ease, without air bubbles being trapped in the final product, or without damage to portions of the surface of the final product.

### Means or Steps for Solving the Problem(s)

In order to solve the problems, according to one aspect of the invention, a method is provided according to claim 1.

The above-mentioned object may be achieved according to any one of the following modes of the invention. These modes will be stated below such that these modes are divided into sections and are numbered, and such that these modes depend upon other mode(s), where appropriate. This facilitates a better understanding of some of the plurality of technical features and the plurality of combinations thereof disclosed in this specification, and does not mean that the scope of these features and combinations should be interpreted to limit the scope of the following modes of the invention. That is to say, it should be interpreted that it is allowable to select the technical features, which are stated in this specification but which are not stated in the following modes, as technical features of the invention.

Furthermore, reciting herein each one of the selected modes of the invention in a dependent form so as to depend from the other mode(s) does not exclude the possibility of the technical features in the dependent-form mode from becoming independent of those in the corresponding dependent mode(s) and to be removed therefrom. It should be interpreted that the technical features in the dependent-form mode(s) may become independent according to the nature of the corresponding technical features, where appropriate.

### Brief Description of the Drawings

[Fig. 1] Fig. 1 is a perspective view illustrating a cap to be molded by a cap molding method according to a first embodiment of the invention, along with the intended application of the cap after molding.
[Fig. 2] Fig. 2 is a process flowchart illustrating the details of the cap molding method, inclusive of additional steps to be performed subsequent to the cap molding method.
[Fig. 3] Fig. 3A is a perspective view illustrating a portion of the cap molding method
[Fig. 4] Fig. 4 is a cross-sectional view illustrating a container and a pusher.
[Fig. 5] Fig. 5 is a cross-sectional view illustrating the mixer depicted in Fig. 3.
[Fig. 6] Fig. 6A is a perspective view illustrating the mold unit depicted in Fig. 3 in a mold open position, and Fig. 6B is a perspective view illustrating the mold unit depicted in a mold closed position.
[Fig. 7] Fig. 7 is a cutaway cross-sectional view illustrating the mold unit depicted in Fig. 3.
[Fig. 8] Fig. 8A is a perspective view illustrating a portion of the cap molding method depicted in Fig. 2 in a time series, and Fig. 8B is a perspective view illustrating another portion of the cap molding method in a time series.
[Fig. 9] Fig. 9 is a process flowchart illustrating the sealing method and the cap attaching method depicted in Fig. 2 in detail.
[Fig. 10] Fig. 10A is a perspective view illustrating a portion of the sealing method depicted in Fig. 9 in a time series, Fig. 10B is a perspective view illustrating another portion of the sealing method in a time series, and Fig. 10C is a perspective view illustrating still another portion of the sealing method in a time series.
[Fig. 11] Fig. 11A is a perspective view illustrating a portion of the sealing method depicted in Fig. 9 in a time series, and Fig. 11B is a perspective view illustrating another portion of the sealing method in a time series.
[Fig. 12] Fig. 12A is a perspective view illustrating a portion of the cap attaching method depicted in Fig. 9 in a time series, and Fig. 12B is a perspective view illustrating another portion of the cap attaching method in a time series.
[Fig. 13] Fig. 13 is a graph for conceptually explaining the speed control for the mixer depicted in Fig. 3.
[Fig. 14] Fig. 14 is a perspective view illustrating a portion of a cap molding method according to a second embodiment of the invention in a time series, which is different from that of the first embodiment.
[Fig. 15] Fig. 15A is an exploded and cross-sectional view illustrating a mold unit for use in performing a cap molding method according to a third embodiment of the invention, and Fig. 15B is a cross-sectional view illustrating the mold unit when assembled.
[Fig. 16] Fig. 16 is a side view for explaining the composite motion of the rotation and the orbiting imparted to the mold unit depicted in Fig. 15.
[Fig. 17] Fig. 17 is a plan view, a cross-sectional view and an enlarged cutaway view for explaining the principles of the relative motion between the female mold and the male mold of the mold unit depicted in Fig. 15.
[Fig. 18] Fig. 18 is another plan view, another cross-sectional view and another enlarged cutaway view for explaining the principles of the relative motion between the female mold and the male mold of the mold unit depicted in Fig. 15.
[Fig. 19] Fig. 19 is still another plan view, still another cross-sectional view and still another enlarged cutaway view for explaining the principles of the relative motion between the female mold and the male mold of the mold unit depicted in Fig. 15.
[Fig. 20] Fig. 20A is a graph for explaining an exemplary speed/time chart of the speed imparted to the mold unit by the mixer, for generating the relative motion between the female mold and the male mold of the mold unit depicted in Figs. 17-19, and Fig. 20B is a graph for explaining another exemplary speed/time chart of the speed.
[Fig. 21] Fig. 21 is a process flowchart illustrating an agitating/degassing process of the cap molding method according to the third embodiment.
[Fig. 22] Fig. 22A is a plan view illustrating a guide cup and a movable member of a mold unit for use in performing a cap molding method according to a fourth embodiment of the invention, Fig. 22B is a side sectional view illustrating the guide cup and the movable member, and Fig. 22C is a front view illustrating a second guide groove of the mold unit.
[Fig. 23] Fig. 23 is an enlarged cutaway front view illustrating a first guide groove and an engagement portion when a guide pin is located in position A within the mold unit depicted in Fig. 22.
[Fig. 24] Fig. 24 is an enlarged cutaway front view illustrating the first guide groove and the engagement portion when the guide pin is located in position B within the mold unit depicted in Fig. 22.
[Fig. 25] Fig. 25 is an enlarged cutaway front view illustrating the first guide groove and the engagement portion when the guide pin is located in position C within the mold unit depicted in Fig. 22.
[Fig. 26] Fig. 26 is an enlarged cutaway front view illustrating the first guide groove and the engagement portion when the guide pin is located in position D within the mold unit depicted in Fig. 22.
[Fig. 27] Fig. 27A is a graph illustrating an exemplary speed/time chart of the orbiting speed of the mold unit depicted in Fig. 22, and Fig. 27B is a graph illustrating another exemplary of the speed/time chart.
[Fig. 28] Fig. 28 is a graph illustrating still another exemplary speed/time chart of the orbiting speed of the mold unit depicted in Fig. 22.

### Modes in which the Invention is practiced

Some of the more specific embodiments of the invention will be described in the following in more detail with reference to the drawings.

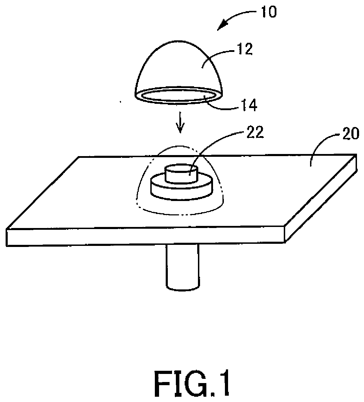

Fig. 1 illustrates in a perspective view a cap 10 as a molded product to be molded using the cap molding method according to a first embodiment of the invention.

The cap 10 is made of synthetic resin and includes a shell 12 that forms a generally hemispherical, hollow shape. The shell 12 includes an outer surface and an inner surface, which both form a generally hemispherical shape, thereby defining a recess (hollow portion) 14, which forms a generally hemispherical shape, within the shell 12.

The cap 10 will be attached to a fastener, with which a fastened member is fastened, for the purpose of enclosing an outside surface of at least a portion of the fastener, to thereby protect at least a portion of the fastener that would otherwise be exposed.

In the example illustrated in Fig. 1, the fastened member is a panel member 20 made of synthetic resin, and the fastener is a bolt (alternatively, a screw, a nut or a rivet) 22, with which the panel member 20 is fastened. In the example illustrated in Fig. 1, the cap 10 is attached to the bolt 22 in order to cover the outside surface of the exposed portion of the bolt 22 that projects from the surface of the panel member 20.

In additional, when attached to the bolt 22, the cap 10 provides a substantially air-tight seal with the bolt 22. For providing the seal, the cap 10 is filled with a sealant prior to the attachment, and the sealant brings the cap 10 and the bolt 22 into air-tight contact with each other. The air-tight contact prevents ingress of foreign matter (i.e., gases, liquids or solids) between the cap 10 and the portion of the bolt 22 that is enclosed by the cap 10. The adhesion and/or air-tightness of the sealant prevent undesired removal of the cap 10 from the bolt 22.

The sealant is made of a synthetic resin which, in the present embodiment, is the same as that of the cap 10. Although the reason will be explained further below, the commonly-used material for making the sealant and the cap 10 is a high-viscosity material and exhibits thermosetting properties, such that the material cures when heated above a prescribed temperature (e.g., 50 °C.), and once cured, the original properties of the material will not be restored even if the temperature decreases. In addition, the material also exhibits the property that, when the material is cooled below a prescribed temperature (e.g., -20 °C.) prior to curing and is frozen, the chemical reaction (curing) in the material stops, and thereafter, when the material is heated and thawed, the chemical reaction (curing) in the material restarts.

In the present embodiment, the material that is commonly used in the sealant and the cap 10 is a two-part type that is furnished by mixing two solutions, which are "Solution A" (curing agent) and "Solution B" (major component). An example of "Solution A" is PR-1776 B-2, Part A (i.e., an accelerator component, and a manganese dioxide dispersion) of PRC-DeSoto International, U.S.A., and an example of "Solution B," which is combined with Solution A, is PR-1776 B-2, Part B (i.e., a base component, and a filled modified polysulfide resin) of PRC-DeSoto International, U.S.A.

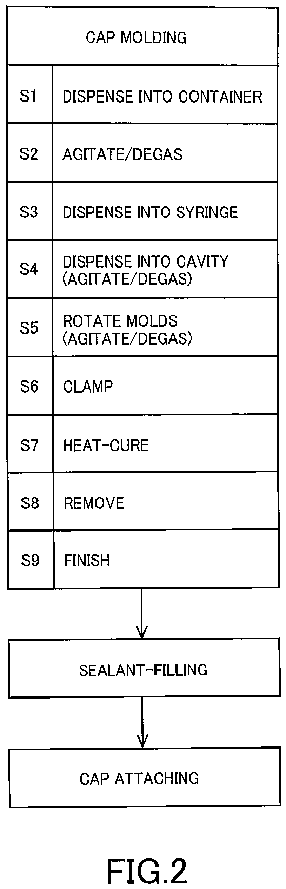

In Fig. 2 the cap molding method according to the present embodiment is illustrated in a process flowchart. This method is performed at the location for manufacturing the cap 10. Although this method will be further described below, after the cap 10 has been molded using this method, a filling process is performed to fill the recess 14 of the cap 10 with the sealant prior to shipping the thus-molded cap 10 (i.e. prior to transporting the cap 10 to a worksite where a worker will attach the cap 10 to the bolt 22).

Subsequently, a cap attaching process is performed at the worksite, wherein the cap 10 is filled with the sealant by a worker at the worksite and the cap 10 is attached to the bolt 22.

The cap molding method according to the present embodiment will now be described with reference to Fig. 2.

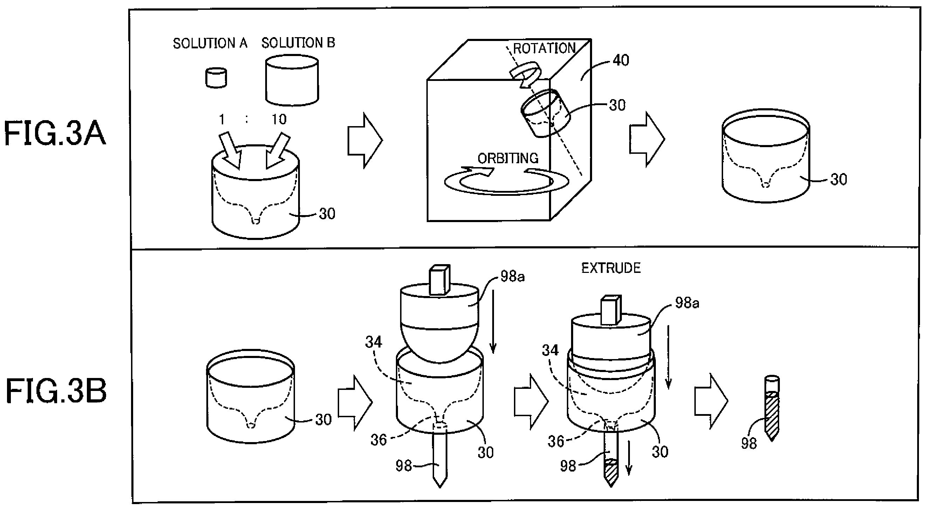

As illustrated in Fig. 2, this method begins at the manufacturing location of the cap 10 with step S1 in which, as illustrated in Fig. 3A, the aforementioned Solutions A and B are dispensed into a container 30 in a predetermined mixing ratio (e.g., 1:10). These two solutions are mixed in the container 10, resulting in a mixture that is an exemplary material for molding the cap 10 in the present embodiment, and is an exemplary material, from which the sealant is made.

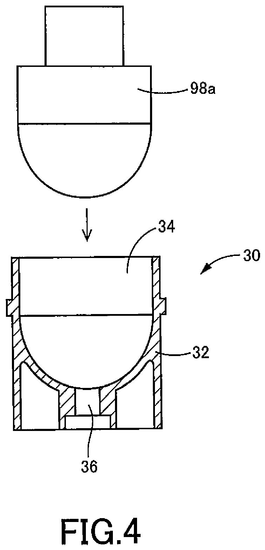

Fig. 4 illustrates the container 30 in a vertical cross-sectional view. The container 30 is configured to include an axially-extending hollow case 32, and a chamber 34 formed within the case 32 in the shape of a coaxially-formed hollow cylinder having one end closed. The bottom section of the chamber 34 has a recess that forms a generally hemispherical shape. By having a bottom section with a recess that forms a hemispherical-shape, the material in the chamber 34 can flow more smoothly than if the bottom section were to be flat, thereby improving the mixing efficiency of the material.

A discharge passage 36 is formed in the bottom section of the chamber 34 for discharging the material (i.e., the mixture of Solutions A and B), which has been dispensed into the chamber 34, after completing the agitating/degassing of the material, and the discharge passage 36 is closed with a detachable plug (not shown) in a selective manner. The dispensing of the material into the container 30 is performed while the discharge passage 36 is closed by the plug.

As illustrated in Fig. 2, the container 30 containing the material is then subjected in step S2 to a planetary motion (i.e., the composite motion of the rotation and the orbiting) as is illustrated in Fig. 3, to thereby agitate (mix) the material while degassing it. In the present embodiment, the rotational axis of the container 30 is tilted relative to the orbital axis of the container 30.

A mixer 40 is used for performing the agitating/degassing process in step S2. The mixer 40 imparts a centrifugal force to the material under vacuum, to thereby agitate the material while degassing it. The agitating/degassing process is performed at a predetermined temperature (e.g., about 20 °C. to about 30 °C.) and at a predetermined humidity (e.g., 50%RH), which is the same in the following steps. In this step S2, the container 30 is subjected to a relatively weak (closer to atmospheric pressure) vacuum pressure (e.g., 40 kPa).

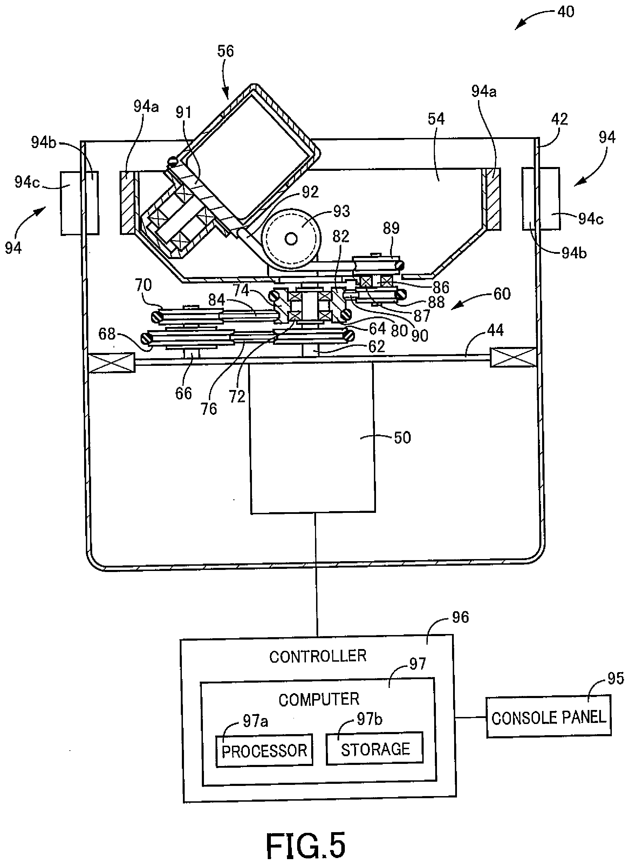

Fig. 5 illustrates an example of the mixer 40 in a partial cross-sectional side view.

The mixer 40 includes a housing 42 having a hollow structure with a bottom (e.g., a hollow cylinder shape) and a lid (not shown) detachably attached to an opening end of the housing 42, so that it has an opening end that closes in a substantially air-tight manner. Within the housing 42, a base frame 44 that is elastically suspended on the housing 42 is disposed so as to absorb possible vibrations.

A motor 50 is mounted on the base frame 44. A rotatable frame 54 having a hollow cylinder shape is coupled to the motor 50. The rotatable frame 54 is rotated about the orbital axis by the motor 50.

The rotational axis is defined in the rotatable frame 54 at a position eccentric to the orbital axis, and in an orientation in which the rotational axis is inclined relative to the orbital axis (e.g., at 45 degrees). The rotational axis is rotated together with the rotatable frame 54.

The container holder 56 is mounted on the rotatable frame 54 so as to be coaxial with the rotational axis and so as to be rotatable about the rotational axis. The container holder 56 is used to hold the aforementioned container 30, or a mold unit as described below. The container holder 56 is rotated about the rotational axis by the motor 50.

In the present embodiment, the motor 50 is directly coupled to the rotatable frame 54, while the motor 50 is indirectly coupled to the container holder 56 via a power transmission system 60 (e.g., a belt driven system, a chain driven system, a gear driven system).

In the example illustrated in Fig. 5, the power transmission system 60 includes: a first rotatable shaft 62 rotated by the motor 50, a first pulley 64 (a pulley is an example of a rotor) that is coaxially affixed to the first rotatable shaft 62, and a second rotatable shaft 66. The second rotatable shaft 66 is rotatably mounted on the base frame 44 so as to be positioned eccentric to and oriented parallel to the first rotatable shaft 62.

The power transmission system 60 further includes a second pulley 68 and a third pulley 70, which are coaxially affixed to the second rotatable shaft 66, and a rotor 74. The rotor 74 is coaxially attached to the first rotatable shaft 62 via a bearing 72, so as to be rotatable relative to the first rotatable shaft 62. A first belt 76 (a belt is an example of an endless transmission) is wound around the first pulley 64 and the second pulley 68. A fourth pulley 80 and a fifth pulley 82 are integrally formed on the rotor 74. A second belt 84 is wound around the third pulley 70 and the fourth pulley 80.

The power transmission system 60 still further includes a third rotatable shaft 86 that is positioned eccentric to and oriented parallel to the orbital axis. The third rotatable shaft 86 revolves together with the rotatable frame 54, while being rotated relative to the rotatable frame 54 via the bearing 87. The power transmission system 60 still further includes a sixth pulley 88 and a seventh pulley 89, each of which is coaxially affixed to the third rotatable shaft 86, and a third belt 90 that is wound around the fifth pulley 82 and the sixth pulley 88.

The power transmission system 60 further includes: an eighth pulley 91 that is rotated coaxially and integrally with the container holder 56, a fourth belt 92 that is wound around the eighth pulley 91 and the seventh pulley 89, and a pair of guide pulleys 93 (in a plan view) that guide a pair of straight portions (in a plan view) of the fourth belt 92 so as to bend the pair of straight portions.

In the present embodiment, the orbiting and the rotation of the container holder 56 are produced by the common motor 50; the orbiting and rotation of the container holder 56 kinetically depend on each other. Further, in the present embodiment, the ratio between the orbiting speed and the rotational speed of the container holder 56 is fixed.

In an exemplary modified version of the mixer 40, while the orbiting and the rotation of the container holder 56 are produced by the common motor 50, the use of a clutch or a CVT (Continuous Velocity Transmission) allows the ratio between the orbiting speed and the rotational speed to vary. In another exemplary modified version, the orbiting and the rotation of the container holder 56 are produced by separate motors, respectively, to thereby allow the orbiting speed and the rotational speed of the container holder 56 to be independent of each other and to be pre-set separately.

As illustrated in Fig. 5, the mixer 40 is configured to further include a brake 94, a console panel 95 and a controller 96.

The brake 94 is disposed so as to rapidly decelerate at least the rotational speed from among the rotational speed and the orbiting speed of the container holder 56. In the present embodiment, the brake 94 is of a type, although not limited thereto, that allows an external force to be exerted onto a movable component (e.g., the rotatable frame 54) by friction, wherein the movable component rotates or linearly moves with the container holder 56.

As illustrated in Fig. 5, the example of the brake 94 includes a ring-shaped band 94a attached to an outer circumferential surface of the rotatable frame 54, and a movable pad 94b rigidly affixed to the housing 42 at at least one position that opposes the band 94a (for the example illustrated in Fig. 5, at two positions that are diametrically opposite of each other).

The brake 94 further includes a displacement mechanism 94c configured to displace the movable pad 94b between the illustrated retracted position, at which position the movable pad 94b is radially spaced from the band 94a, and an active position, at which position the movable pad 94b contacts the band 94a and generates friction between the movable pad 94b and the band 94a. The displacement mechanism 94c may be manually operated or automatically operated. For the displacement mechanism 94c to be automatically operated, the displacement mechanism 94c is electrically connected with the controller 96, and an actuator (not shown) built in the displacement mechanism 94c is electrically controlled by the controller 96.

In the present embodiment, when the rotatable frame 54 is decelerated by the brake 94, the motor 50 is correspondingly decelerated. Following the deceleration of the motor 50, the container holder 56 will be decelerated. As a result, the brake 94 decelerates the container holder 56 in both of the rotational direction and the orbital direction.

The console panel 95 is operated by the user to start/stop the mixer 40 and to pre-set a profile of the rotation/orbiting speed to be controlled.

The controller 96 is electrically connected with the console panel 95 and the motor 50. The controller 96 principally comprises a computer 97; as is well-known, the computer 97 includes a processor 97a and storage 97b.

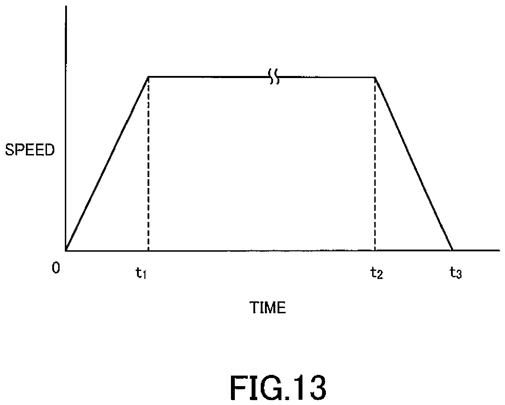

In response to a user's start command issued, the controller 96 initiates the execution of a program (not shown) stored in the storage 97b by the processor 97a. As a result, the motor 50 is controlled to execute a rotational/orbiting speed profile (e.g., the profile shown by the graph in Fig. 13), which was pre-set by the user.

More specifically, the controller 96 drives the motor 50 to change its speed using an inverter (not shown) for Variable Voltage Variable Frequency control, in accordance with the user's settings. The motor 50 is controlled by the inverter control to execute a selected one of an acceleration mode (e.g., including a rapid acceleration mode, a gradual acceleration mode, etc.), a constant speed mode, and a deceleration mode, to thereby allow each of the rotational speed and the orbiting speed of the container holder 56 to have a desired acceleration gradient and a desired deceleration gradient.

In the example illustrated in Fig. 13, the rotational speed and the orbiting speed of the container holder 56 vary with time, such that they are different in magnitude, but are similar in profile. In an alternative, the rotational speed and the orbiting speed may vary with time to implement respective speed profiles that are not similar.

As illustrated in Fig. 3A, the container 30 holding the material is placed within the container holder 56, and then the mixer 40 is activated. In operation, the interior of the housing 42 of the mixer 40 is set to a sub-atmospheric pressure. A vacuum pump (not shown) is connected to the mixer 40 and the air within the housing 42 is suctioned by the vacuum pump. Due to the fluid communication between the space within the container holder 56 and the space within the housing 42, the vacuum pump also suctions air from within the container holder 56.

The material is agitated due to the centrifugal force created by the planetary motion produced by the mixer 40. Further, air bubbles trapped in the material are released from the material, owing to the synergistic effect of the centrifugal force created by the planetary motion of the mixer 40 and the negative pressure caused by the vacuum atmosphere, resulting in the degassing of the material.

After the agitating/degassing of the material is finished, the container 30 is removed from the mixer 40, as illustrated in Fig. 3A.

Next, as illustrated in Fig. 2, the material is dispensed into syringes 98 (i.e. smaller containers that divide the material into smaller amounts) in step S3. More specifically, in this step S3, the material is discharged from the container 30 in individual doses, as illustrated in Fig. 3B, each discharged individual dose of the material being dispensed into one syringe 98. Ultimately, the entire amount of the material stored in the same container 30 is divided into a plurality of syringes 98.

As illustrated in Fig. 3B, the syringe 98 has a hollow cylinder shape with a tip end (e.g., tapered) having a smaller-diameter opening and a base end having a larger-diameter opening. The tip end is the smaller-diameter end, while the base end is the larger-diameter end. The syringe 98 is used such that, after the amount of the material is dispensed into the syringe 98, the amount of material is discharged from the tip end of the syringe 98 in a conventional manner, e.g., by using positive pressure or gravity.

In the present embodiment, a pusher 98a is pushed into the chamber 34 of the container 30 in order to discharge the material from the container 30, as illustrated in Fig. 3B. The pusher 98a has an exterior shape that is complementary to the interior shape of the chamber 34 (e.g., an exterior shape having a protrusion that forms a generally hemispherical shape). As the pusher 98a moves towards the discharge passage 36 within the chamber 34, the material is extruded from the discharge passage 36.

In the present embodiment, while transferring the material from the container 30 to the syringe 98, the container 30 is held in space, as illustrated in Fig. 3B, with the chamber 34 facing upward and the discharge passage 36 facing downward. In this orientation, the pusher 98a is moved downwardly within the chamber 34. As a result, the material is downwardly extruded from the chamber 34.

Further, in the present embodiment, while transferring the material from the container 30 to the syringe 98, the syringe 98 is held in space with the base end facing upward and the top end facing downward. In this orientation, the material, which has been downwardly extruded from the container 30, is injected into the syringe 98 via its base end.

Thereafter, the material moves downwardly within the syringe 98 while displacing air within the syringe 98 and discharging the air from the opening (readily impedes the discharge of air due to the smaller diameter than the opening of the base end) of the tip end of the syringe 98. As a result, the material increasingly accumulates in the syringe 98, such that the uppermost level of the material rises in the direction from the tip end towards the base end of the syringe 98.

In the present embodiment, step S3 is performed at atmospheric pressure; however, if it is alternatively performed at sub-atmospheric pressure, then it becomes possible to more reliably prevent air bubbles from being trapped in the material while it is being dispensed into the syringe 98.

Subsequently, as illustrated in Fig. 2, the material is dispensed into a cavity 110 of the mold unit 100 in step S4.

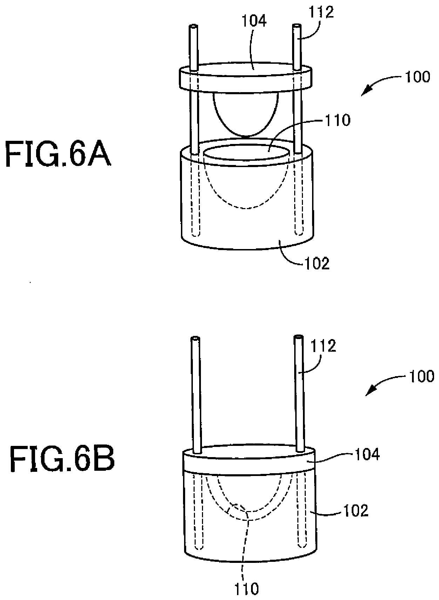

Fig. 6 illustrates an example of the mold unit 100 in a perspective view. The mold unit 100 includes a female mold 102 and a male mold 104 that can be spaced relatively close to each other. In the present embodiment, the female mold 102 acts as a stationary mold defining the cavity 110, while the male mold 104 acts as a movable mold having a protrusion that will be inserted into the cavity 110. The female mold 102 imparts the desired shape to the exterior surface of the cap 10, while the male mold 104 imparts the desired shape to the interior surface of the cap 10.

Both of the female mold 102 and the male mold 104 are made of a synthetic resin, an example of which is a self-lubricating synthetic resin, an example of which is PTFE (Teflon (registered trademark)).

The female mold 102 and the male mold 104 have a common centerline, along which the male mold 104 is linearly movable relative to the female mold 102. In the present embodiment, a plurality of parallel metal guide rods 112 are detachably affixed to the female mold 102 for achieving the linear movement. A plurality of through-holes are formed in the male mold 104 in a complimentary manner, so that the guide rods 112 can slidably fit into the through-holes.

Fig. 6A illustrates the female mold 102 and the male mold 104 in a position (i.e., a mold open position) in which the male mold 104 is spaced from the female mold 102, which allows the material to be dispensed into the cavity 110 of the female mold 102, while Fig. 6B illustrates the female mold 102 and the male mold 104 in a position (i.e., a mold closed position) in which the male mold 104 is closely engaged with the female mold 102, to thereby define a space between the female and male molds 102 and 104, which space defines the final shape of the cap 10.

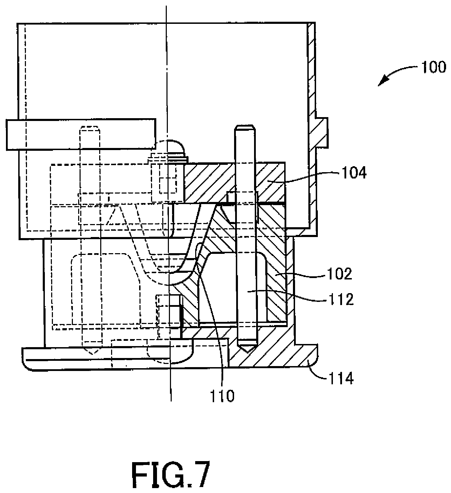

Fig. 7 is a side view illustrating the mold unit 100 in the mold closed position. The mold unit 100 includes a case 114 having a hollow cylinder shape, which receives the female mold 102 in its bottom end. The case 114 has a shape that fits into the container holder 56 of the mixer 40 without any wasteful gaps and accommodates the case 114 in the container holder 56 without any noticeable play during operation of the mixer 40.

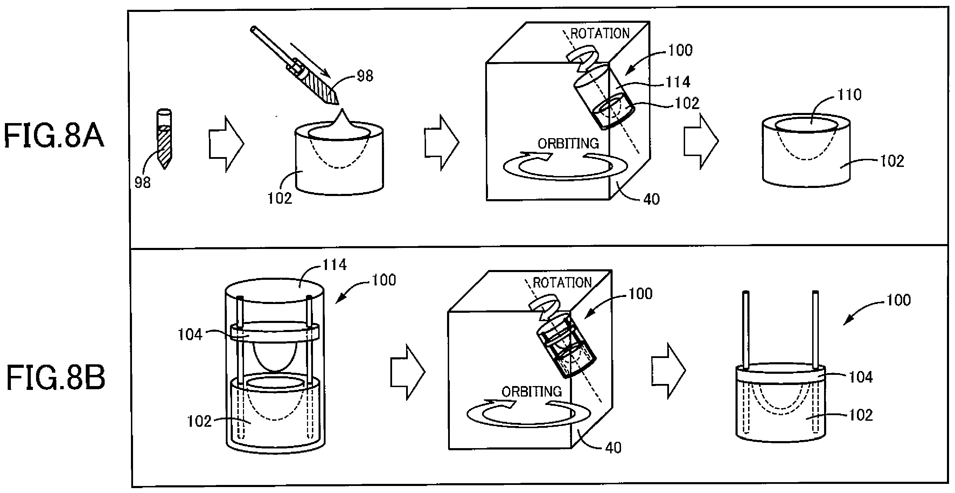

In step S4 illustrated in Fig. 2, the material is extruded from the syringe 98, and then the material is dispensed into the cavity 110 of the female mold 102, as illustrated in Fig. 8A.

In addition, in this step S4, the female mold 102 (with the guide rods 112 removed from the female mold 102) is received in the container holder 56 of the mixer 40, along with the case 114, as illustrated in Fig. 8A. In this state, the mixer 40 is operated with the female mold 102 disposed in a vacuum. As a result, the material that has been dispensed into the cavity 110 of the female mold 102 is agitated/degassed. The surface of the material, with which the female mold 102 has been filled, is thereby flattened (i.e., smoothed). Thereafter, the female mold 102 is removed from the mixer 40 as illustrated in Fig. 8A.

In this step S4, the pressure in the container holder 56 is brought to a higher vacuum pressure (e.g., 20 kPa) than in the above-described step S2.

Incidentally, the stronger the vacuum on the material, the better the degassing effect of the material is. Moreover, the larger the volume of the material, the greater the fluidity of the material is; therefore, during the agitating/degassing of the material under centrifugal force, the material is easily heated by friction. On the other hand, the higher the temperature of the material, the more easily the material generates foam. In an environment that easily generates foam, the stronger the vacuum, the more foaming is promoted.

With this in mind, when the material is agitated/degassed within the container 30 in step S2, the material is more easily heated because of its larger volume than that of the material when it is agitated/degassed in step S4 within the female mold 102, and then, it generates foam more easily.

Therefore, in the present embodiment, the agitating/degassing in step S2 is performed at a weaker vacuum than that of the agitating/degassing in step S4. For the same reasons, the agitating/degassing in step S5 is performed at a stronger vacuum than that of the agitating/degassing in step S2. In addition, the agitating/degassing in step S5 is performed at the same vacuum as that of the agitating/degassing in step S4.

Subsequently, in step S5 depicted in Fig. 2, the cap 10 is manufactured using the mold unit 100 by rotational molding.

More specifically, as illustrated in Fig. 8A, the guide rods 112 and the male mold 104 are attached to the female mold 102 that has been filled with the agitated/degassed material, and the case 114 is attached to these components. As a result, the mold unit 100 is assembled. Thereafter, in the mold open position, the mold unit 100 is entirely disposed in the container holder 56 of the mixer 40. Then, the mixer 40 is activated.

When the mixer 40 is activated, the male mold 104 is not closely engaged with the female mold 102, so that the fluidity of the material within the female mold 102 is not substantially obstructed by the male mold 104. During this period (when the male mold 104 is not close to the female mold 102), the material is agitated/degassed efficiently. The agitating/degassing is also performed at a relatively strong vacuum (e.g., 20 kPa, as described above).

During the period in which the rotational speed and/or the orbiting speed of the mixer 40 increase(s) up to a target value, the centrifugal force generated by the planetary motion and applied to the male mold 104 increases as the rotational speed and/or the orbiting speed increase(s); this results in a corresponding increase in the driving force for moving the male mold 104 towards the female mold 102 along the guide rods 112.

When the driving force eventually overcomes the frictional resistance between the male mold 104 and the guide rods 112, the male mold 104 will move towards the female mold 102 along the guide rods 112. Eventually, the male mold 104 is brought into contact with the female mold 102. The mixer 40 continues operating even after the contact, to thereby allow the material within the mold unit 100 to be agitated/degassed in the mold closed position as well. The agitating/degassing is performed at a relatively strong vacuum (e.g., 20 kPa, as described above), similar to the above-described previous agitating/degassing.

In the present embodiment, the male mold 104 is prevented from being brought into contact with the female mold 102 during an initial period of the molding process in order to maximize the fluidity of the material in the cavity 110 during this time period and thereby maximizing the effect of the agitating/degassing. After a given subsequent period of time has elapsed, the male mold 104 is allowed to be brought into contact with the female mold 102.

Once the rotational molding using the mold unit 100 has been completed, the entire mold unit 100 is removed from the mixer 40. At this time, the mold unit 100 is in the mold closed position, as illustrated in Fig. 8B.

Thereafter, the mold unit 100 is clamped in step S6 depicted in Fig. 2. More specifically, the female mold 102 and the male mold 104 are tightly closed and clamped using a clamping tool (not shown). This reliably prevents the female mold 102 and the male mold104 from detaching from each other in an undesirable manner in the subsequent heat-curing step.

Subsequently, in step S7 depicted in Fig. 2, a heat-curing process is performed. More specifically, the entire mold unit 100 is moved into a high temperature room (e.g., at from about 40 °C to about 60 °C), to thereby heat-cure the material within the cavity 110 of the mold unit 100.

Thereafter, in step S8 depicted in Fig. 2, the male mold 104 is moved away from the female mold 102 to allow the cap 10 to be removed from the mold unit 100 as the completed product. That is, the mold unit 100 is dissembled.

Subsequently, in step S9 depicted in Fig. 2, the cap 10 is finished by removing undesirable burrs, etc. With that, the manufacturing process of the cap 10 is completed.

It is noted that, in step S4 in the present embodiment, the female mold 102 filled with the material is subjected to the planetary motion by the mixer 40 as illustrated in Fig. 8A, to thereby agitate/degas the material in the female mold 102; in the subsequent step S5, the mold unit 100 filled with the material is subjected to the planetary motion by the mixer 40, to thereby agitate/degas the material in the mold unit 100, which means that the agitating/degassing process using the mixer 40 is performed twice.

In an alternative, the invention may be practiced in a mode in which the performance of step S5 is omitted, i.e. steps S6 and S7 follow upon completion of step S4. Only the agitating/degassing of the material within the female mold 102 need be performed in step S4, in case an adequate agitating/degassing effect can be achieved thereby.

Thereafter, a sealant-filling method is performed as illustrated in Fig. 2.

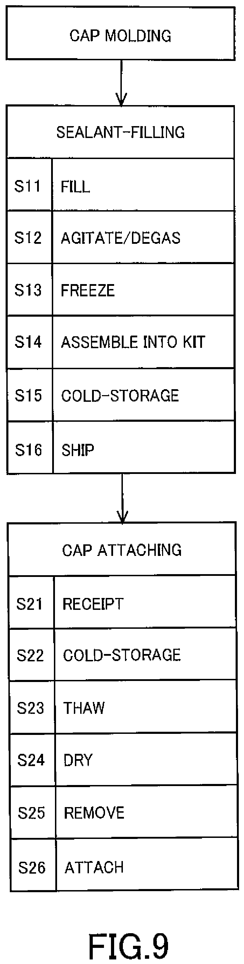

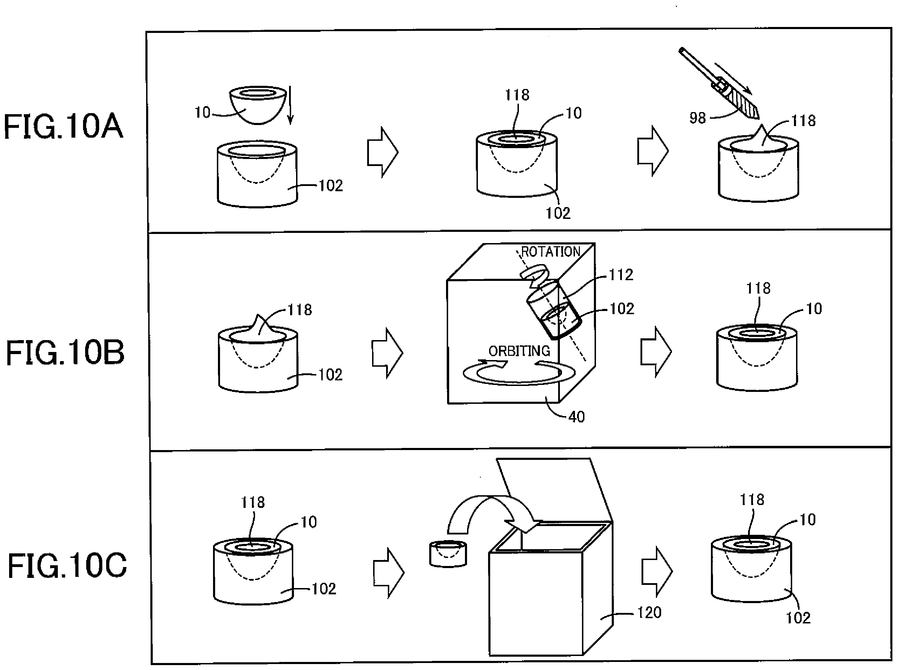

As illustrated in Fig. 9, when the sealant-filling method will be performed, the cap 10 is first loaded in step 11 as a completed product into the cavity 110 of the female mold 102 as illustrated in Fig. 10A, so that the cap 10 is held in position with the opening of the recess 14 facing upward, in preparation for filling with the sealant from above.

The use of the female mold 102 is not essential for holding the cap 10 in position. Although an alternative tool can be used, in case the female mold 102 is used, it is not necessary to manufacture an exclusive-use jig for holding the cap 10 in position.

Thereafter, the recess 14 of the cap 10 held in position is filled with the sealant 118 as illustrated in Fig. 10A. The sealant 118 is extruded from the syringe 98 and is injected into the recess 14. In the present embodiment, as described above, the material that forms the cap 10 and the sealant 118 that fills the recess 14 of the cap 10 have the same composition.

Next, in step S12 depicted in Fig. 9, the sealant 118 is agitated/degassed using the mixer 40. More specifically, the female mold 102 that has been filled with the sealant 118 is disposed in the container holder 56 of the mixer 40 as illustrated in Fig. 10B, and in this state, the mixer 40 is operated with the container holder 56 placed in a vacuum (e.g., at the same vacuum as steps S4 and S5). As a result, the sealant 118, with which the recess 14 of the cap 10 has been filled, is agitated/degassed. At this time, flattening (smoothing) of the surface of the sealant 118, with which the recess 14 of the cap 10 has been filled, is performed. Thereafter, the female mold 102 is removed from the mixer 40 as illustrated in Fig. 10B.

Subsequently, in step S13 depicted in Fig. 9, the sealant 118 is frozen together with the cap 10. More specifically, as illustrated in Fig. 10C, the female mold 102 holding the cap 10 is placed within a freezer 120 together with the case 112, and such that the cap 10 is filled with the sealant 118. The interior temperature of the freezer 120 is, e.g., between about -50 °C and about -70 °C. The freezing time is, e.g., about 1 hour. Once the sealant 118 has been frozen (solidified or coagulated), the female mold 102 is removed from the freezer 120.

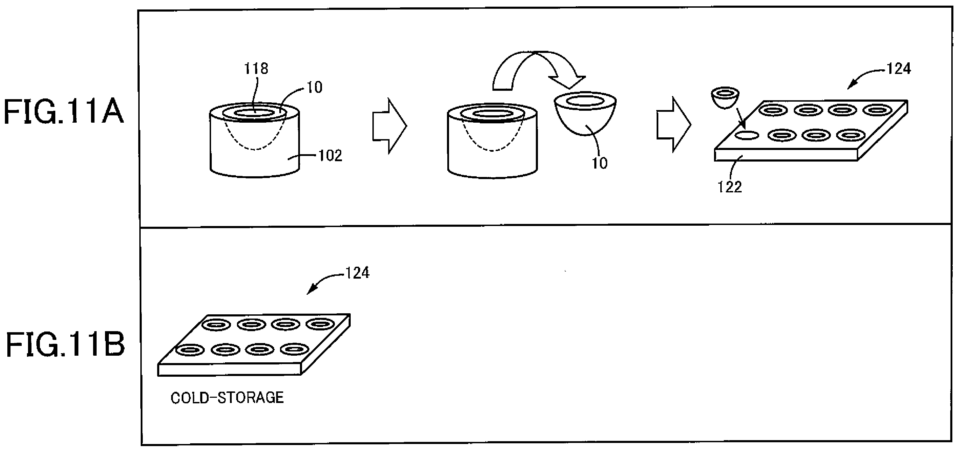

Thereafter, in step S14 depicted in Fig. 9, a plurality of product kits are manufactured. More specifically, the cap 10, which is filled with the sealant 118, is removed from the female mold 102 as illustrated in Fig. 11A, and a plurality of caps 10, each of which has been produced in the same manner as above and each of which has been filled with the frozen sealant 118, are loaded into the plurality of recesses of a pallet 122. As a result, the caps 10 are arrayed on one pallet 122, to thereby complete one product kit 124.

Subsequently, in step S15 depicted in Fig. 9, the entire product kit 124 is placed into cold-storage. More specifically, as illustrated in Fig. 11B, the product kit 124 is placed within a low-temperature room (although not shown, e.g., a constant temperature room between about -50 °C and -70 °C. It includes a cooling box), to thereby prevent the sealant 118 within each cap 10 from unintentionally thawing during storage.

Thereafter, in step S16 depicted in Fig.9, the caps 10, each of which has been filled with the sealant 118, are shipped to the worksite while the caps 10 are kept in cold-storage. With that, this sealant-filling method is completed.

As a result, the manufacture of the caps 10, which serve as final products, is completed. Each cap 10 is a combination of the cap 10, which served as an intermediate product, and the frozen sealant 118, with which each cap 10 is filled.

In other words, at this point in time, each cap 10 serving as a final product is a multi-layered structure made of a solid outer layer (shell 12) and a solid inner layer that is located within the outer layer, wherein the outer layer is made of a material, the original fluidity of which cannot be restored even by subsequent thawing due to the curing having already been completed, and the inner layer is made of a material (sealant 118), the original fluidity of which can be restored by subsequent thawing due to the fact that the curing was not previously completed.

After the sealant-filling method has been completed in the manner described above, the cap attaching method, as illustrated in Fig. 9, does not start at the manufacturing location, but rather it starts at the worksite.

More specifically, in step S21, the product kit 124 is first received at the worksite. Next, in step S22, the received product kit 124 is placed into cold-storage in a freezer (not shown).

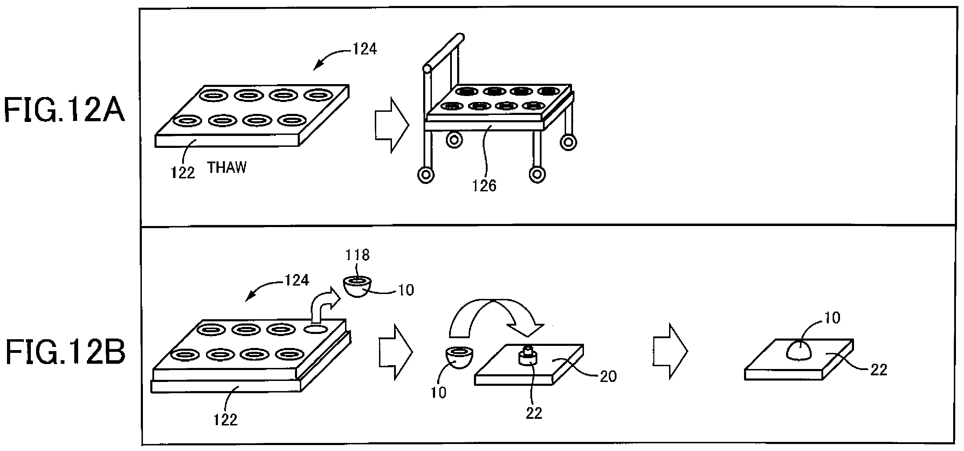

Subsequently, in step S23, when it becomes necessary to initiate the cap attaching process using the product kit 124, the product kit 124 is removed from the freezer and thereafter, the product kit 124 is thawed in a thawing area (although not shown, e.g., a thawing room) as illustrated in Fig. 12A. The thawing process can be performed, for example, at room temperature, by direct heating using a heater (e.g., a hot-air-type heater having a drying function), or by indirect heating by immersing in hot water.

After the cap 10 is thawed, the shell 12 is still solid and not liquefied, while the sealant 118 is liquefied and exhibits its original fluidity.

Thereafter, in step S24 (or concurrently with the thawing of step S23), the product kit 124 is dried using a dryer (not shown), to thereby remove any condensation that has formed on the surface of the cap 10 due to the thawing. The dryer can be configured, for example, to blow air onto the cap 10 at room temperature or hot air, to thereby blow off water on the surface of the cap 10.

Subsequently, in step S25, the needed product kit 124 is removed from the thawing area or the drying section, and the removed product kit 124 is transported to the worksite, e.g., using a handcart 126 as illustrated in Fig. 12A. Thereafter, in step S26, as illustrated in Fig. 12B, the worker removes the cap 10, which will be used now and which is filled with the sealant 118, from the pallet 122 and attaches the cap 10 to an exposed portion of the bolt 22 that projects from the surface of the panel member 20.

At this time, the cap 10 is solid while the sealant 118 within the cap 10 is fluid, which enables the cap 10 to be attached to the bolt 22. The sealant 118 deforms relatively freely so as to fill in any possible gaps between the cap 10 and the bolt 22, without leaving any gaps. As a result, a seal between the cap 10 and the bolt 22 is achieved. With that, this cap attaching method is completed.

As will be evident from the foregoing explanation, in the present embodiment, the first half of step S4 depicted in Fig. 2, which is performed to extrude the material from the syringe 98 and fill the female mold 102 with the extruded material, constitutes an example of the "filling" set forth in the aforementioned mode (1); the last half of step S4 depicted in the same figure, which is performed to rotate/orbit the female mold 102 filled with the material using the mixer 40, and step S5 depicted in the same figure together constitute an example of the "agitating/degassing" set forth in the same mode; and step S7 depicted in the same figure constitutes an example of the "curing" set forth in the same mode.

Further, in the present embodiment, the last half of step S4 depicted in Fig. 2, which is performed to rotate/orbit the female mold 102 filled with the material using the mixer 40, constitutes an example of the "primary agitating/degassing sub-step" set forth in the aforementioned mode (3); the first half of step S5 depicted in the same figure, which is performed to assemble the mold unit 100, constitutes an example of the "assembling sub-step" set forth in the same mode; and the last half of step S5 depicted in the same figure, which is performed to rotate/orbit the assembled mold unit 100 using the mixer 40, constitutes an example of the "main agitating/degassing sub-step" set forth in the same mode.

Next, a cap molding method according to a second embodiment of the present invention will be described. The present embodiment, however, is similar to the first embodiment, except for step S3 depicted in Fig. 2; therefore, the present embodiment will be described in detail with regard to only the elements that differ from those of the first embodiment, while a redundant description of the elements common with those of the first embodiment will be omitted.

In the first embodiment, while transferring the material from the container 30 to the syringe 98 as illustrated in Fig. 3B, the container 30 is held in space with the chamber 34 facing upward and with the discharge passage 36 facing downwardly. In this orientation, the pusher 98a is moved downward within the chamber 34. As a result, the material is extruded downwardly from the chamber 34.

Further, in the first embodiment, while transferring the material from the container 30 to the syringe 98, the syringe 98 is held in space with its base end facing upward and with its tip end facing downward. In this orientation, when downwardly extruded from the container 30, the material is injected into the syringe 98 via its base end.

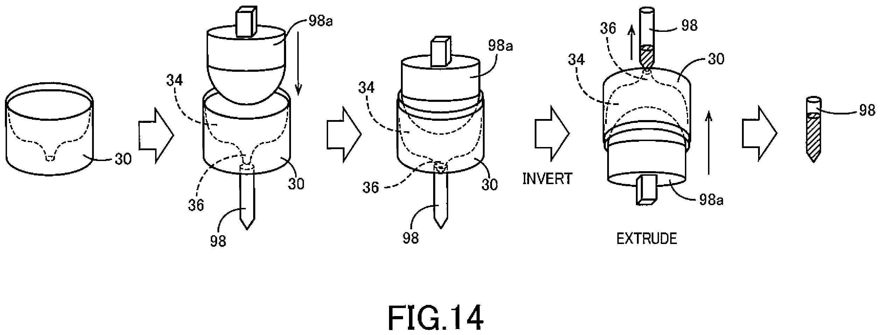

In contrast, in the present embodiment as illustrated in Fig. 14, while transferring the material from the container 30 to the syringe 98, the container 30 is first held in space, similar to the first embodiment, with the chamber 34 facing upward and with the discharge passage 36 facing downward. In this orientation, the opening of the chamber 34 is blocked by the pusher 98a. As a result, even if the container 30 is inverted, material from the container 30 will not leak from the opening of the chamber 34 due to gravity.

Thereafter, the container 30 is inverted from the original orientation, and as a result, the container 30 is held in space with the discharge passage 36 facing upward and with the chamber 34 facing downward. Subsequently, the syringe 98 is held in space with its base end facing upward with its tip end facing downward, and with the tip end and the outlet of the discharge passage 36 coinciding with each other.

In this orientation, the pusher 98a is moved upwardly within the chamber 34. As a result, the material is extruded upwardly from the chamber 34. When upwardly extruded from the container 30, the material is injected into the syringe 98 not via its base end, but rather via its tip end.

Thereafter, the material moves upwardly within the syringe 98 while displacing air within the syringe 98 and discharging the air from the opening of the base end of the syringe 98 (less prone to impede the discharge of air due to the larger diameter than the opening of the tip end). As a result, the material increasingly accumulates in the syringe 98, such that the uppermost level of the material rises in the direction from the tip end to the base end.

Thus, in the present embodiment, when the material is injected into the syringe 98, because it is injected via the tip end of the syringe 98, it is completed without compressing air within the syringe 98, as opposed to when it is injected from the base end. As a result, when the material is injected into the syringe 98, it is less likely that air bubbles will be trapped in the material within the syringe 98, than when the material is injected via the base end of the syringe 98.

Next, a cap molding method according to a third embodiment of the present invention will be described. The present embodiment, however, is similar to the first embodiment, except for an essential portion of the molding method, the structure of the mold unit, and the speed control for the mixer; therefore, the present embodiment will be described in detail with regard to only the elements that differ from those of the first embodiment, while a redundant description of the elements common with those of the first embodiment will be omitted.

In the first embodiment, as illustrated in Figs. 2 and 8, only the female mold 102, which has been filled with the material, is rotated/orbited using the mixer 40 in step S4 prior to assembling the mold unit 100, and then the mold unit 100 is assembled in step S5. The assembled mold unit 100 is then rotated/orbited using the mixer 40.

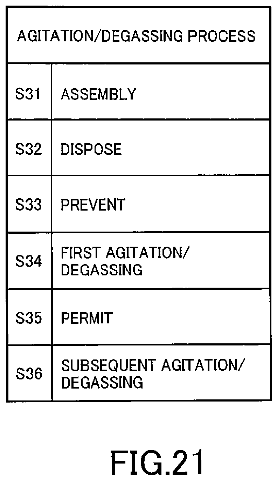

In contrast, in the present embodiment, step S4 is omitted; instead, step S5 includes a mold-closing prevention period in a first half thereof and includes a mold-closing permissible period in a last half thereof. In other words, in the present embodiment, although it will be further explained below with reference to Fig. 21, the agitating/degassing process is performed such that it has a mold-closing prevention period and a mold-closing permissible period.

During the mold-closing prevention period, while the male mold in the assembled mold unit is prevented from being closely engaged with the female mold, the material within the female mold is agitated/degassed. In contrast, during the mold-closing permissible period, the male mold is permitted to be closely engaged with the female mold, and after the engagement, the material is agitated/degassed within the narrow cavity defined by the male and female molds that are engaged with each other.

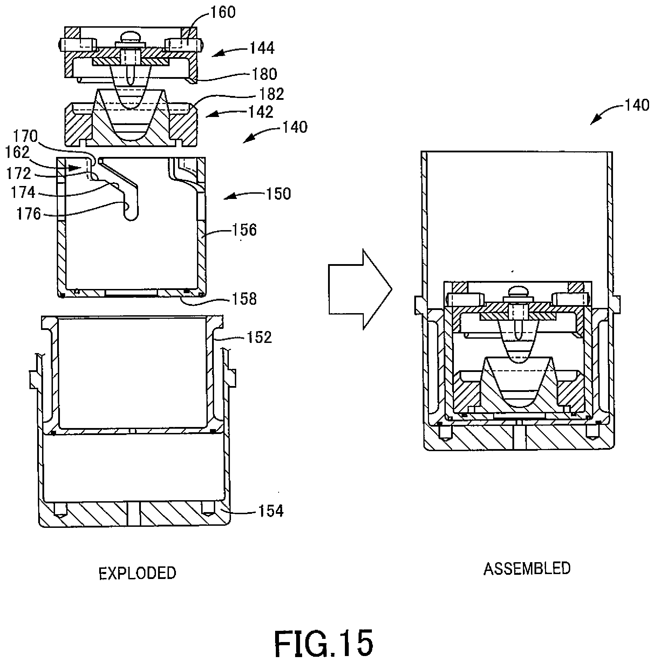

Fig. 15 illustrates a mold unit 140 for use in performing the above-described agitating/degassing process in an exploded view and an assembled view, both of which are viewed from the front.

Similar to the mold unit 100 depicted in Figs. 6 and 7, the mold unit 140 has a female mold 142 and a male mold 144, each of which has a cylindrical outer circumferential surface. The female mold 142 and the male mold 144 together define a cavity 146. Both of the female mold 142 and the male mold 144 are primarily comprised of POM (polyacetal), which is an example of an excellent self-lubricating engineering plastic; however, a portion of each of the female mold 142 and the male mold 144, which is brought into contact with its counterpart mold, is made of PTFE (Teflon (registered trademark)).

The mold unit 140 further includes a guide cup 150 (a first cylindrical member), a spacer 152 and a mold-attachment cup 154 (a second cylindrical member having a larger diameter than the first cylindrical member).

The guide cup 150, which has a hollow cylinder shape with a bottom, includes a cylindrical section 156 and a bottom section 158 that encloses one of the two ends of the cylindrical section 156. The female mold 142 fits within the guide cup 150, contacts the bottom section 158 and is detachably attached to an inner circumferential surface of the guide cup 150, such that the female mold 142, after being attached, is rigidly affixed to the inner circumferential surface of the guide cup 150 with axial and rotational relative-movement inhibited. The guide cup 150 is made, e.g., of POM.

The spacer 152 also has a hollow cylinder shape with a bottom; the guide cup 150 slidably fits within the spacer 152 along its inner circumferential surface and is detachably attached to the inner circumferential surface of the spacer 152, such that the guide cup 150, after being attached, is rigidly affixed to the inner circumferential surface of the spacer 152 with axial and rotational relative-movement inhibited.

The mold-attachment cup 154 also has a hollow cylinder shape with a bottom; the spacer 152 slidably fits within the mold-attachment cup 154 along its inner circumferential surface and is detachably attached to the inner circumferential surface of the mold-attachment cup 154, such that the spacer 152, after being attached, is rigidly affixed to the inner circumferential surface of the mold-attachment cup 154 with axial and rotational relative-movement inhibited.

The mold-attachment cup 154 fits into the container holder 56 without any noticeable play and is detachably attached to the inner circumferential surface of the container holder 56, such that the mold-attachment cup 154, after being attached, is rigidly affixed to the inner circumferential surface of the container holder 56 with axial and rotational relative-movement inhibited.

Not only the female mold 142, but also the male mold 144, is fitted within the inner circumferential surface of the guide cup 150. The female mold 142 is rigidly affixed to the guide cup 150, such that the female mold 142 will always integrally rotate/orbit with the guide cup 150. In contrast, the male mold 144 fits in the guide cup 150 so as to be axially and rotatably movable relative to the guide cup 150. As a result, the male mold 144 can move axially towards and away from the female mold 142 while being guided by the inner circumferential surface of the guide cup 150. The movement of the male mold 144 relative to the female mold 142 is limited by cooperative action of guide pins and elongated guide holes that are fitted with each other, as will be described below.

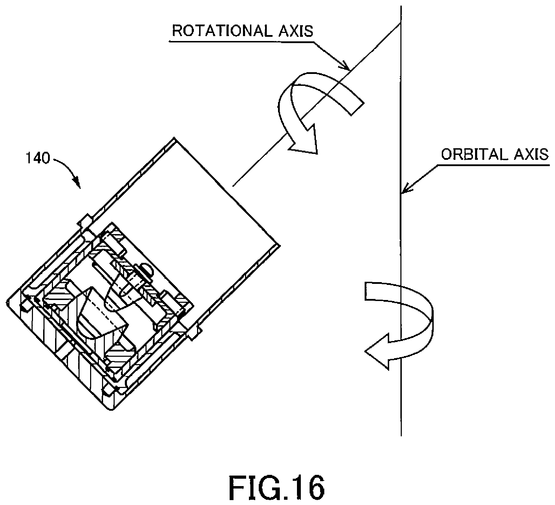

As illustrated in Fig. 16, while the mold unit 140 is orbiting about the orbital axis, it is rotated about the rotational axis, which is positioned eccentric from the orbital axis and which is tilted relative to the orbital axis.

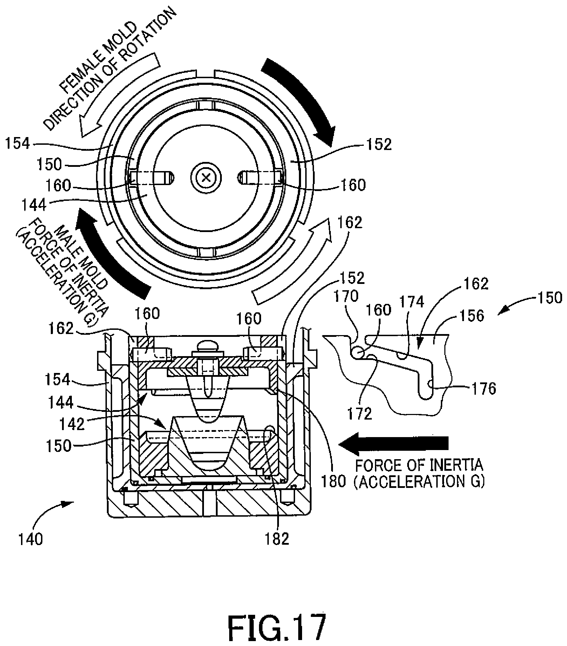

As illustrated in Figs. 15 and 17, a plurality of radially-extending guide pins 160 are attached to the male mold 144. In the example depicted in Figs. 15 and 17, two guide pins 160 are aligned in a diametrically opposed manner.

As illustrated in Fig. 15, a plurality of elongated guide holes (alternatively, guide grooves) 162 are formed in the cylindrical section 156 of the guide cup 150 so as to extend from a top end of the cylindrical section 156. Each guide pin 160 is engaged with one elongated guide hole 162 so as to be movable relative to the elongated guide hole 162 along the length thereof. The width of each guide elongated hole 162 is set to be larger than the diameter of each guide pin 160.

As illustrated in Figs. 15 and 17, each elongated guide hole 162 includes a first portion 170 extending axially (downwardly) from the top end of the cylindrical section 156, a second portion 172 extending in the circumferential direction from a terminal end of the first portion 170, a third portion 174 extending obliquely downwardly from a terminal end of the second portion 172 and a fourth portion 176 extending axially (downwardly) from a terminal end of the third portion 174.

As described above, the male mold 144 is axially and rotatably movable relative to the guide cup 150, but a path along which the male mold 144 can move is defined by the cooperative action of the guide pins 160 and the elongated guide holes 162. In addition, relative displacement (including relative rotation and relative linear motion) between the male mold 144 and the guide cup 150 generates relative movement between the male mold 144 and the female mold 142.

The relative displacement between the male mold 144 and the guide cup 150, if described summarily, is generated based on the inertial force (primarily the direction from among the magnitude and the direction) applied to the rotational direction of the male mold 144 and the axial component (magnitude) of the centrifugal force acting on the male mold 144.

While the mixer 40 is inactive, each guide pin 160 is located in its initial state at the terminal end (the lowest position) of the first portion 170 as illustrated in Fig. 17, due to gravity acting on the male mold 144.

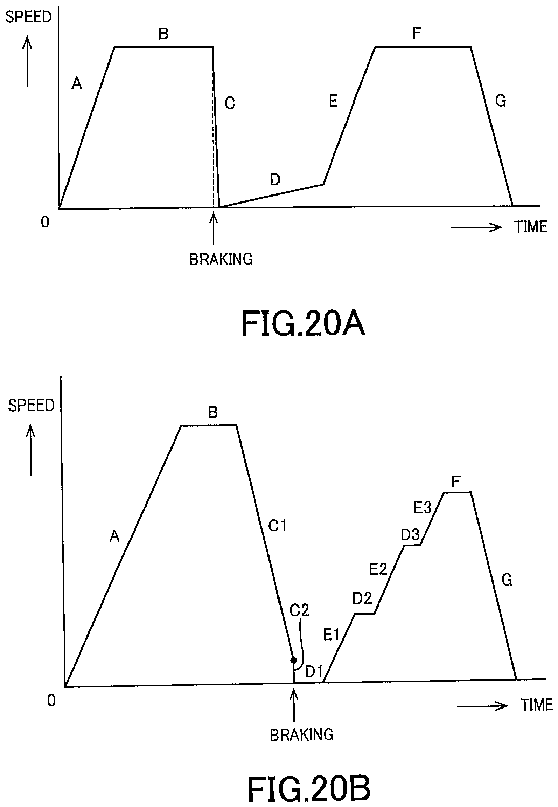

In Fig. 20A, an example of a speed-time profile of the speed (i.e., at least the rotational speed from among the rotational speed and the orbiting speed) imparted to the mold unit 140 by the mixer 40 is illustrated by a graph.

In the example depicted in Fig. 20A, the speed change profile is common for the rotational speed (the frequency of rotations) and the orbiting speed (the frequency of rotations) of the mold unit 140, but differs in magnitude. During operation of the mixer 40, the rotational direction of the mold unit 140 constantly matches the direction from the first portion 170 to the fourth portion 176 of each elongated guide hole 162 formed in the cylindrical section 156 of the guide cup 150, as illustrated in Fig. 17.

Further, in the example depicted in Fig. 20A, one cycle of speed control includes a first rapid-acceleration interval A, a second constant-speed interval B, a third rapid deceleration interval C, a fourth gradual-acceleration interval D, a fifth rapid acceleration interval E, a sixth constant-speed interval F and a seventh gradual-deceleration interval G.

During the first rapid-acceleration interval A, the motor 50 is driven in the rapid acceleration mode, to thereby accelerate the female mold 142 in the rotational direction. As a result of this, as illustrated in Fig. 17, an inertial force acts on the male mold 144 in the opposite direction of the direction that the second portion 172 extends out from the terminal end (the lowest position) of the first portion 170 (opposite to the rotational direction of the female mold 142). As a result, the guide pins 160 are pressed against the side wall of the first portions 170 in the initial position depicted in Fig. 17.

During the second constant-speed interval B, the motor 50 is driven in the constant speed mode, to thereby rotate and orbit both of the female mold 142 and the male mold 144 at a constant speed. During this time, the guide pins 160 are held in the initial position depicted in Fig. 17. At this point in time, because the male mold 144 is not yet closely engaged with the female mold 142, the material within the female mold 142, despite having a high viscosity, is efficiently agitated/degassed in a state of being highly fluid. During this second constant-speed interval B, the material is urged to completely fill the surface of the female mold 142.

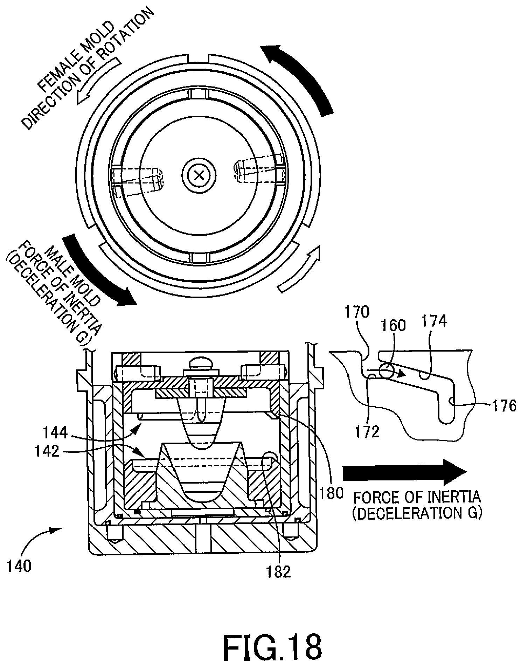

During the third rapid-deceleration interval C, the brake 94 is activated with the motor 50 powered off, to thereby decelerate the female mold 142 in the rotational direction. As a result of this, as illustrated in Fig. 18, an inertial force acts on the male mold 144 in the same direction as the direction that the second portion 172 extends out from the terminal end (the lowest position) of the first portion 170 (the same direction as the rotation directional of the female mold 142). As a result, the guide pins 160 move away from the initial position depicted in Fig. 17, and towards the terminal end of the second portion 172 (the rightmost position), to thereby allow the male mold 144 to rotate coaxially relative to the female mold 142.

If the inertial force continuously acts on the male mold 144 in the same direction, the guide pins 160 will move from the terminal end (the rightmost position) of the second portion 172 shown in Fig. 18 into the third portion 174 and then along the third portion 174. The third portion 174 is inclined relative to the circumferential direction of the male mold 144. Therefore, the male mold 144 moves axially and gradually approaches the female mold 142. The guide pins 160 eventually reach the terminal end (the rightmost position) of the third portion 174.

In the present embodiment, the third portion 174 is inclined downwardly relative to the circumferential direction of the male mold 144. For this reason, as compared to an embodiment in which the third portion 174 is not inclined, the guide pins 160 are less likely to move back along the third portion 174 against gravity in an unplanned manner.

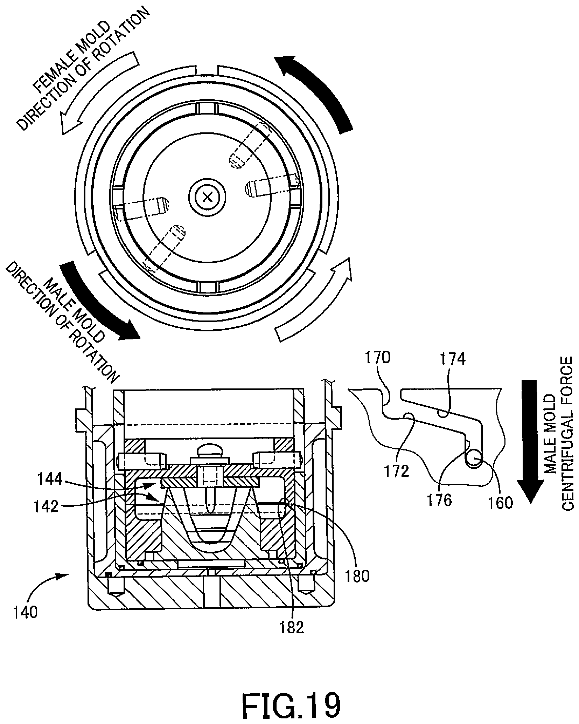

During the fourth gradual-acceleration interval D, the motor 50 is driven in the gradual acceleration mode with the guide pins 160 positioned at the fourth portion 176, to thereby accelerate the male mold 144 in the orbital direction. As a result, an axial centrifugal force transpires in the male mold 144 and increases over time. This centrifugal force acts on the male mold 144 in the direction (downward direction) that causes the male mold 144 to move towards the female mold 142. As a result, the guide pins 160 descend along the fourth portion 176 and move towards the female mold 142 as illustrated in Fig. 19.

During this fourth gradual-acceleration interval D, the axial centrifugal force acting on the male mold 144 increases at a more gradual gradient than when the motor 50 is driven in the rapid acceleration mode. Therefore, the male mold 144 approaches the female mold 142 at a low speed. Thus, the male mold 144 is prevented from rushing into the material within the female mold 142 and thus incorporating air into the material.

As illustrated in Fig. 19, if the axial centrifugal force continuously acts on the male mold 144, a stop 180 disposed on a forward facing surface of the male mold 144 abuts on a receiving surface 182 disposed on a rearward facing surface of the female mold 142, whereby the male mold 144 reaches the proximal limit to the female mold 142. As a result, the male mold 144 is brought into close engagement with the female mold 142.

During the fifth rapid-acceleration interval E, the motor 50 is driven in the rapid acceleration mode, to thereby rapidly accelerate the mold unit 140 in both the rotational direction and the orbital direction (at a steeper gradient than the preceding fourth gradual-acceleration interval E).

During the sixth constant-speed interval F, the motor 50 is driven in the constant speed mode, to thereby rotate/orbit the female mold 142 and the male mold 144 together at a constant speed. As a result, the material within the narrow cavity 146 defined by the female mold 142 and the male mold 144 is agitated/degassed in a vacuum. During this sixth constant-speed interval F, the material is also urged to completely fill the surfaces of the female mold 142 and the male mold 144.

During the seventh gradual-deceleration interval G, the motor 50 is driven in the deceleration mode, to thereby decelerate the female mold 142 and the male mold 144 together in both the rotational direction and the orbital direction. During this seventh gradual-deceleration interval G, a more gradual speed gradient is realized than the third rapid-deceleration interval C, because the brake 94 is not actuated. Eventually, the female mold 142 and the male mold 144 will stop moving.

The agitating/degassing process according to the present embodiment will now be described in detail below with reference to Fig. 21.

This agitating/degassing process begins with step S31, in which the male mold 144 is attached to the female mold 142 that has been filled with the material as illustrated on the left side in Fig. 8B, such that, although the female mold 142 and the male mold 144 are movable towards each other, the female mold 142 and the male mold 144 are spaced apart from each other, to thereby perform the assembly process of assembling the mold unit 140.

Next, in step S32, a disposing process is performed that disposes the assembled mold unit 140 in the mixer 40 as illustrated in the center in Fig. 8B.

Subsequently, in step S33, a prevention process is initiated when the mixer 40 is actuated and is performed during the mold-closing prevention period; the prevention processes prevents the male mold 144 from moving towards the female mold 142 and from bringing the male mold 144 into close engagement with the female mold 142 due to the centrifugal force generated by the orbiting of the mold unit 140. In the present embodiment, the mold-closing prevention period is defined as including the first rapid-acceleration interval A, the second constant-speed interval B and the third rapid-deceleration interval C as illustrated in Fig. 20A.

In parallel with the above-described step S33, a first agitating/degassing process is performed during the mold-closing prevention period in step S34 and agitates/degasses the material within the female mold 142 using the mixer 40 while the male mold 144 is disengaged from the female mold 142.

Subsequently, in step S35, a permitting process is performed during the mold-closing permissible period, which follows the mold-closing prevention period, while the mixer 40 is operating and permits the male mold 144 to move towards the female mold 142 to bring the male mold 144 into close engagement with the female mold 142 due to the centrifugal force acting on the male mold 144. In the present embodiment, the mold-closing permission period is defined as including the fourth gradual-acceleration interval D, the fifth rapid-acceleration interval E, the sixth constant-speed interval F and the seventh gradual-deceleration interval G, as illustrated in Fig. 20A.

In parallel with the above-described step S35, a subsequent agitating/degassing process is performed in step S36 during the mold-closing permission period, while the male mold 144 is closely engaged with the female mold 142, that agitates/degasses the material within the cavity 146 of the mold unit 140 using the mixer 40.

In the first embodiment illustrated in Figs. 8A and 8B, prior to performing the process (i.e., step S5 depicted in Fig. 2) of agitating/degassing the material by subjecting the entire mold unit 100, which has the cavity 110 filled with the material, to rotating/orbiting using the mixer 40, the process (i.e., step S4 depicted in Fig. 2) of agitating/degassing the material is performed by subjecting only the female mold 102, which has been filled with the material, to rotating/orbiting using the mixer 40. Thus, the agitation/degassing of the material within the female mold 102 using the mixer 40 is carried out in two sub-periods.

Because the agitating/degassing of step S5 is performed while the material is confined within the narrow cavity 110 in a state of low fluidity, step S4 is performed prior to step S5, in order to agitate/degas the material while the material is not confined within the female mold 142 and is in a state of high fluidity.

On the other hand, in the present embodiment, step S4 is omitted and step S5 is performed such that both a first process of agitating/degassing the material while the male mold 144 is disengaged from the female mold 142 and a subsequent process of agitating/degassing the material while the male mold 144 is engaged with the female mold 142 are performed under continuous operation of the mixer 40.

Therefore, the present embodiment provides the possibility of agitating/degassing the material within the female mold 142 without interrupting the mixer 40, resulting in an improvement in the agitating/degassing efficiency, a reduction in the time required to mold the cap 10 and an improvement in the manufacturing efficiency of the cap 10.

In Fig. 20B, an example of a modified version of the example of the speed/time chart depicted in Fig. 20A (hereinafter, referred to as "the first example") is illustrated with a graph.

The speed/time chart in the example depicted in Fig. 20B (hereinafter, referred to as "the second example") shares the basic speed profile with the speed/time chart in the first example.

More specifically, in this second example, the motor 50 is driven in the rapid acceleration mode during the first rapid-acceleration interval A. The motor 50 is driven in the constant speed mode during the second constant-speed interval B and the sixth constant-speed interval F. The motor 50 is driven in the deceleration mode during the seventh gradual-deceleration interval G.

This second example is similar to the first example, except for the third rapid-deceleration interval C that employs, as an alternative interval, a series of a deceleration interval C1, in which the motor 50 is driven in the deceleration mode without actuating the brake 94, and a deceleration interval C2, in which the brake 94 is actuated.

In this second example, differently from the first example, the motor 50 is current-controlled during the first deceleration interval C1, to thereby reduce the rotational speed and the orbiting speed to sufficiently close to zero without relying on the brake 94; during the subsequent deceleration interval C2, the brake 94 is actuated to thereby impart an inertial force to the rotational direction of the male mold 144. In this second example, because the speed of the rotatable frame 54 when the brake 94 begins operation is less than in the first example, the load on the brake 94 and the motor 50 is reduced.

Further, in this second example, a series of three constant-speed intervals D1, D2 and D3 interleaved with three rapid-acceleration intervals E1, E2 and E3 are used as intervals corresponding to the series of the fourth gradual-acceleration interval D and the fifth rapid-acceleration interval E of the first example. During each of the constant-speed intervals D1, D2 and D3, the motor 50 is driven in the constant speed mode, while during each of the rapid-acceleration intervals E1, E2 and E3, the motor 50 is driven in the rapid acceleration mode.

In this second example, by selecting the constant speed modes interleaved with the rapid acceleration modes, the male mold 144 can experience a lesser centrifugal force than an alternative that selects a continuous rapid acceleration mode. As a result, when the male mold 144 is approaching the female mold 142 due to the centrifugal force acting on the male mold 144 and the guide pins 160 are descending into the fourth portion 176, as illustrated in Fig. 19, this descending speed is reduced. Therefore, this second example, like the first example, prevents the male mold 144 from rushing into the material within the female mold 142 while incorporating air into the material.

It is noted that, in the present embodiment, the brake 94 generates the inertial force required for moving the guide pins 160 from a locked position, which prevents the male mold 144 from approaching the female mold 142, to an unlocked position that permits this approaching. On the other hand, in case the required inertial force can be generated using current control of the motor 50, it is not necessary to operate the brake 94.

Next, a cap molding method according to a fourth embodiment of the present invention will be described. The present embodiment, however, is similar to the third embodiment, except for the structure of the mold unit and the speed control for the mixer; therefore, the present embodiment will be described in detail with regard to only the elements that differ from those of the third embodiment, while a redundant description of the elements common with those of the third embodiment will be omitted.

In the third embodiment, as described above, the mold unit 140 is configured to include the guide pins 160 (each is an example of the "first member" set forth in the above mode (5)), which integrally move with the male mold 144, and the elongated guide holes 162 (each is an example of the "second member" set forth in the same mode), which integrally move with the female mold 142. The guide pins 160 move along the elongated guide holes 162, each having a predetermined path, due to the cooperative action of the inertial force, which that acts on the male mold 144 in the rotational direction of the male mold 144 because of its rotation and which varies over time at least in the direction of the force, and the axial centrifugal force, which acts on the male mold 144 because of its orbiting and which varies over time in the magnitude of the force. As a result, the operational state of the male mold 144 is switched between a state, in which the male mold 144 is prevented from closely engaging with the female mold 142, and a state, in which the male mold 144 is permitted to closely engage the female mold 142.

Thus, in the third embodiment, the relative motion between the guide pins 160 and the elongated guide holes 162 takes place without using any additional intervening movable-members, thereby making it easy to reduce the part count.

In contrast, in the present embodiment, the relative motion between the guide pins 160 and guide grooves takes place using an additional intervening movable-member, in order to improve its stability and to simplify the design. Further, in the present embodiment, the speed control for the mixer 40 is performed, not using the brake 94, but rather using current control for the motor 50.

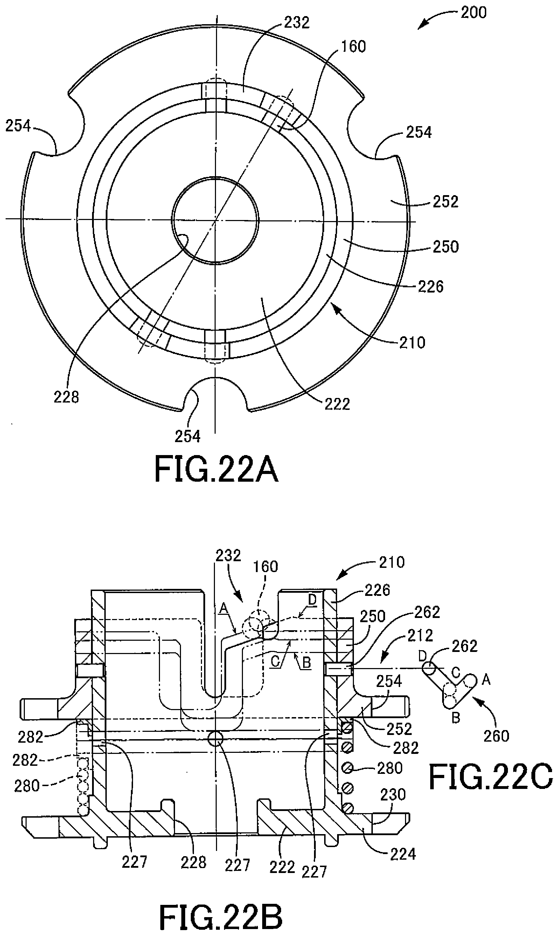

Fig 22A illustrates in a plan view a mold unit 200 for use in performing the cap molding method according to the present embodiment. This mold unit 200 is similar in basic configuration to the mold unit 140 according to the third embodiment depicted in Fig. 17; therefore, this mold unit 200 will be described below with duplicative description omitted. While the mold unit 140, as illustrated in Fig. 17, includes the guide cup 150 and the spacer 152, the mold unit 200 according to the present embodiment replaces the guide cup 150 and the spacer 152 with a guide cup 210 and a movable member 212.

Fig. 22A illustrates in a plan view only the assembly of the guide cup 210 and the movable member 212, extracted from the mold unit 200, while Fig. 22B illustrates the assembly in a side cross-sectional-view.

As illustrated in Fig. 22B, the guide cup 210 includes a bottom section 222, which forms generally a circular plate shape; a lower flange 224 extends radially outwardly from the bottom section 222. The guide cup 210 further includes a cylindrical section 226 that extends coaxially with and vertically from the bottom section 222. Through-holes 227 serving as airflow holes are formed in the cylindrical section 226. A through-hole 228 serving as an airflow hole is formed in the bottom section 222. Notches 230 are formed on an outer circumferential edge of the lower flange 224 through the thickness of the lower flange 224, and are located at circumferentially spaced apart positions, with each notch 230 serving as an airflow hole. One example of a material constituting the guide cup 210 is POM.

Similar to what is illustrated in Fig. 17, the outer circumferential surface of the female mold 142 fits in the inner circumferential surface of the cylindrical section 226. The female mold 142 is rigidly affixed to the guide cup 210 with the female mold 142 contacting the bottom section 222. On the other hand, the outer circumferential surface of the lower flange 224 fits in the inner circumferential surface of the mold-attachment cup 154 depicted in Fig. 17. The guide cup 210 is rigidly affixed to the mold-attachment cup 154 with the guide cup 210 contacting the bottom section of the mold-attachment cup 154.

Similar to what is illustrated in Fig. 17, the outer circumferential surface of the male mold 144 fits in the inner circumferential surface of the cylindrical section 226, so that the male mold 144 is coaxially movable and rotatable relative to the cylindrical section 226. The motion of the male mold 144 relative to the guide cup 210 (in addition, the female mold 142 is rigidly affixed to the guide cup 210), however, is limited due to the cooperative action of the guide pins 160 of the male mold 144 (see Fig. 17) and first guide grooves 232 formed in the cylindrical section 226. As illustrated in Fig. 22B, each first guide groove 232 extends generally axially from an uppermost surface of the cylindrical section 226 towards the bottom section 222. Each first guide groove 232 is open at the uppermost surface of the cylindrical section 226.

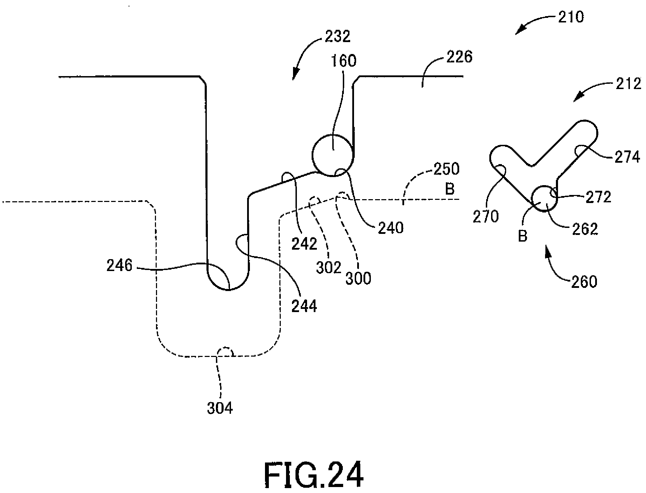

As illustrated with enlargement in Fig. 24, the bottom surface of each first guide groove 232 includes a first section 240, a second section 242, a third section 244 and a fourth section 246. The first and fourth sections 240 and 246 each comprise a downwardly convex arc shape that is partially complementary to the outer circumferential surface of the respective guide pin 160.

In particular, the first section 240 plays an important role in preventing the male mold 144 from engaging with the female mold 142, while the fourth section 246 plays an important role in permitting the male mold 144 to engage with the female mold 142. For this reason, the fourth section 246 is closer in position to the female mold 142 than the first section 240.

The second section 242 extends obliquely and has a straight segment that interconnects the first section 242 with an upper end of the third section 244; and the second section 242 has a slanted surface that contacts the guide pin 160 (an example of the aforementioned "second slanted surface"); this slanted surface decomposes the axial centrifugal force (the downward force) acting on the male mold 144 during its orbiting by the mixer 40, to thereby convert the axial centrifugal force into a rotational force acting on the male mold 144. This second section 242 is inclined, relative to an imaginary straight line extending from the first section 240 in the circumferential direction of the cylindrical section 226, in a direction that extends towards the fourth section 246. The third section 244 is a straight segment that extends vertically from the fourth section 246 in a direction away from the female mold 142.

As illustrated in Fig. 22B, the movable member 212 has a cylindrical section 250 and an upper flange 252 that extends radially outwardly from a bottom of the cylindrical section 250. Notches 254 are formed on the outer circumferential edge of the upper flange 252 through the thickness of the upper flange 252, and are located at circumferentially spaced apart positions, with each notch 254 serving as an airflow hole. The outer circumferential surface of the upper flange 252 fits in the inner circumferential surface of the mold-attachment cup 154 depicted in Fig. 17, so that the upper flange 252 is axially movable and coaxially rotatable relative to the mold-attachment cup 154.

The upper flange 252 is located above the lower flange 224. The upper flange 252 and the lower flange 224 cooperate to provide the same function as the spacer 152 depicted in Fig. 17.

As illustrated in Fig. 22B, the outer circumferential surface of the cylindrical section 226 of the guide cup 210 fits in the inner circumferential surface of the cylindrical section 250 of the movable member 212, so that the guide cup 210 is axially movable and coaxially rotatable relative to the movable member 212. The guide cup 210 acts as a stationary member relative to the movable member 212. One example of a material constituting the movable member 212 is POM.

The possible range of motion of the movable member 212 relative to the guide cup 210, however, is limited as illustrated in Fig. 22C, due to the cooperative action of second guide grooves 260 (in the present embodiment, there are two that are diametrically opposed to each other), which are formed through the thickness of the cylindrical section 226, and radially-extending guide pins 262 (in the present embodiment, there are two that are diametrically opposed to each other) that are rigidly affixed to the cylindrical section 250 of the movable member 212.

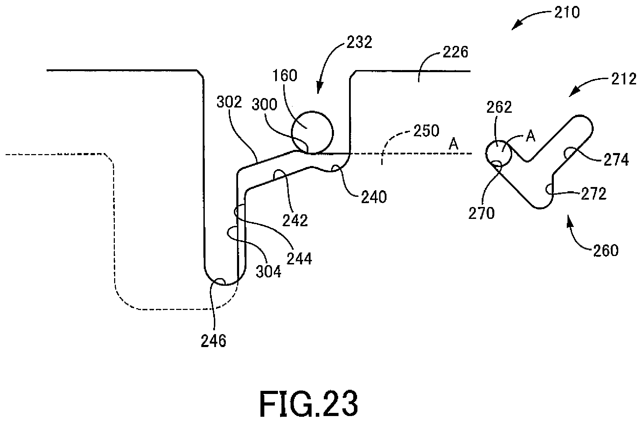

As illustrated in Fig. 22C, each second guide groove 260 is generally V-shaped as a whole. Fig. 22C illustrates one of the second guide grooves 260 as viewed from the outside of the guide cup 210 in the radial direction. In addition, Fig. 22B illustrates one of the first guide grooves 232 as viewed from the inside of the guide cup 210 in the radial direction. Figs. 23-26 each illustrate one first guide groove 232 and one second guide groove 260 as viewed from the inside of the guide cup 210 in the radial direction.

As illustrated in Fig. 23, the guide pin 262 (or the movable member 212), which slidably fits in the second guide groove 260, is movable relative to the second guide groove 260 (or the guide cup 210). Because the second guide groove 260 has a closed groove shape, the second guide groove 260 and the guide pin 262 cooperate to limit the motion of the movable member 212 relative to the guide cup 210, not only axially but also rotationally.

As illustrated with enlargement in Fig. 23, the second guide groove 260 includes a first section 270, which is a straight segment obliquely and downwardly extending from an upper end thereof, a second section 272 vertically extending from a lower end of the first section 270, and a third section 274, which is a straight segment obliquely and upwardly extending from an upper end of the second section 272.

The first section 270 approximates the overall shape of the second guide groove 260 and corresponds to one of two arms of the letter "V", while the third section 274 corresponds to the other arm. The second section 272 connects the first section 270 with the third section 274. The first through third sections 270, 272 and 274 are arranged in order in one rotational direction of the guide cup 210. The upper end of the third section 274 is higher than the upper end of the first section 270.

The first section 270 decomposes a downward force acting on the movable member 212 (the magnitude of the axial centrifugal force acting on the movable member 212 due to the orbiting minus the elastic force of a spring 280) and has a slanted surface (the lower surface of the first section 270; one example of the aforementioned "first slanted surface"), that converts that portion of the downward force into a rotational force acting on the movable member 212. The third section 274 decomposes an upward force acting on the movable member 212 (the magnitude of the elastic force of the spring 280 minus the axial centrifugal force) has a slanted surface (the upper surface of the third section 274; another example of the aforementioned "first slanted surface") that converts that portion of the upward force into a rotational force acting on the movable member 212. The rotational forces generated by the first and third sections 270 and 274 both have the same direction.

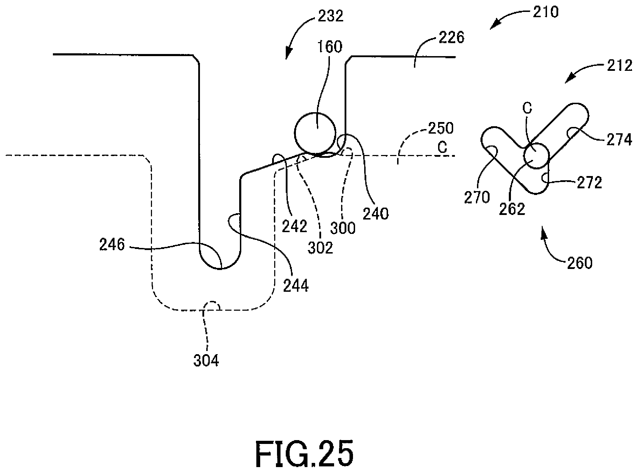

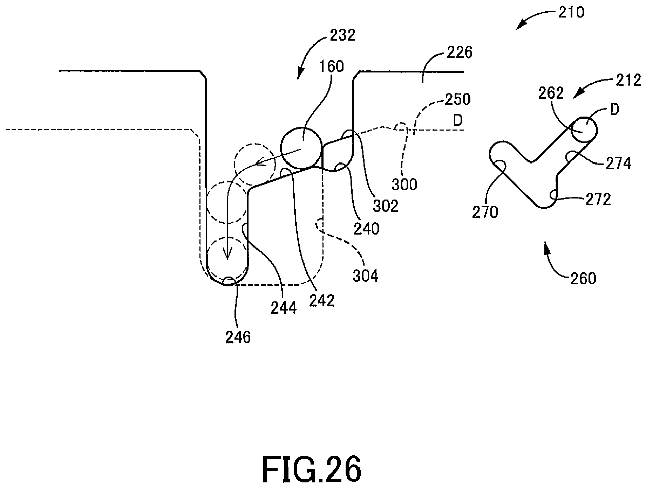

Fig. 23 indicates that the guide pin 262 is located at Position A, that is, the position of the upper end of the first section 270. Fig. 24 indicates that the guide pin 262 is located at Position B (i.e., the position of the lower stroke end of the movable member 212), that is, the position of the lower end of the first section 270. Fig. 25 indicates that the guide pin 262 is located at Position C, that is, the position of the upper end of the second section 272. Fig. 26 indicates that the guide pin 262 is located at Position D, that is, the position of the upper end of the third section 274. Fig. 22B indicates that the guide pin 262 is located at Position D (i.e., the position of the upper stroke end of the movable member 212).

As illustrated in Fig. 22B, the spring 280, which has a coil shape and is an example of an elastic member, is interposed between the guide cup 210 and the movable member 212. In the present embodiment, the spring 280 is disposed so as to coaxially extend along and surround the cylindrical section 226. This spring 280 has its bottom end supported on an upward surface of the lower flange 224 and its top end supported on a downward face of the upper flange 252 via the retainer 282. This spring 280 is adapted to always bias the movable member 212 relative to the guide cup 210 in the direction that causes the movable member 212 to move axially away from the guide cup 210. Limits in moving the movable member 212 towards and away from the guide cup 210 vary depending on the rotational position of the guide pins 262 within and relative to the second guide grooves 260, and thus, vary depending on the rotational position of the movable member 212 relative to the guide cup 210.

As illustrated in Fig. 22B, engagement portions 290 are formed in the cylindrical section 226 of the movable member 212. Each engagement portion 290 moves integrally with the movable member 212 and, as illustrated in Fig. 23, changes the apparent shape of the bottom of each first guide grooves 232 for the guide pin 160, to thereby control the position of each guide pin 160.

The initial position of each guide pin 262 is Position A depicted in Fig. 23. In this state, the mixer 40 starts the rotation/orbiting of the mold unit 200. As a result, the axial centrifugal force acting on the movable member 212 increases from zero; when the axial centrifugal force overcomes the preload of the spring 280 shown in Fig. 22B, the movable member 212 descends while rotating in one direction due to the slanted surface of the first section 270 of the second guide groove 260. As a result, the guide pin 262 will move from Position A to Position B. Fig. 22B illustrates in solid lines the spring 280 when situated in a fully extended position (Position D of guide pin 262); Fig. 22B illustrates in dotted lines the spring 280 when situated in a fully compressed position (Position B of guide pin 262).

Thereafter, when the orbiting speed of the mold unit 200 shifts from an increasing phase (or a constant speed phase) to a decreasing phase, the axial centrifugal force acting on the movable member 212 decreases, resulting in movement of each guide pin 262 from Position B to Position C. Subsequently, the guide pin 262 ascends while rotating in the same direction due to the slanted surface of the third section 274 of the second guide groove 260. As a result, guide pin 262 will move from Position C to Position D.

As illustrated in Fig. 23, each engagement portion 290 includes a first section 300 extending generally in parallel with the circumferential direction of the cylindrical section 226, a second section 302 extending obliquely relative to the circumferential direction of the cylindrical section 226 and a third section 304 that constitutes a notch (recess).

As illustrated in Fig. 23, when the guide pin 262 is in Position A, the first section 300 of each engagement portion 290 changes the apparent shape of the first section 240 of each first guide groove 232, so that the male mold 144 is more reliably prevented from being brought into close engagement with the female mold 142. More specifically, each first section 300 lifts each guide pin 160 (the male mold 144).

Further, when each guide pin 262 is in Position A, the third section 304 of each engagement portion 290 changes the apparent shape of the fourth section 246 of each first guide groove 232, so that the male mold 144 is more reliably prevented from being brought into close engagement with the female mold 142. More specifically, the third section 304 narrows the apparent groove width of the third section 244 of each first guide groove 232, to thereby prevent each guide pin 160 from entering the third section 244, from becoming closer to the fourth section 246, and from bringing the male mold 144 into close engagement with the female mold 142.

As illustrated in Fig. 24, when the guide pin 262 is in Position B, each engagement portion 290 descends to a lower position than in Position A, and rotates in the direction that allows each engagement portion 290 to move towards the first section 240 of each first guide groove 232. At this time, the first section 300 of each engagement portion 290 permits each guide pin 160 to be brought into contact with the first section 240 of each first guide groove 232, and the third section 304 permits each guide pin 160 to move downward along the third section 244 of each first guide groove 232. The reason is that the third section 304 moves away from the groove of each first guide groove 232 in the rotational direction, to thereby allow each guide pin 160 to enter the third section 244 and become closer to the fourth section 246, and to thereby allow the male mold 144 to be brought into close engagement with the female mold 142.

At this stage, while it is possible that each guide pin 160 will overcome the protrusion of each first guide groove 232, which is located between the first section 240 and the second section 242, and the male mold 144 will be brought into close engagement with the female mold 142, it is also possible that each guide pin 160 cannot overcome the protrusion and thus the male mold 144 will not be brought into close engagement with the female mold 142.

As illustrated in Fig. 25, when the guide pin 160 is in Position C, each engagement portion 290 ascends to a higher position than in Position B, and allows the protrusion of each engagement portion 290, which is located between the first section 300 and the second section 302 to push up each guide pin 160, to thereby help each guide pin 160 overcome the protrusion of each first guide groove 232. At this stage, while it is possible that the male mold 144 will be brought into close engagement with the female mold 142, it is also possible that the male mold 144 will not be brought into close engagement with the female mold 142.

As illustrated in Fig. 26, when each guide pin 262 is in Position D, each engagement portion 290 ascends to a higher position than in Position C and rotates in the direction that allows each engagement portion 290 to move towards the first section 240 of each first guide groove 232. During a transition period, in which the guide pin 262 moves from Position C to Position D, because the first section 300 and the second section 302 move away from the guide pin 160, the guide pin 160 will be located in the space within the third section 304. As a result, before the point in time that the guide pin 262 reaches Position D, the guide pin 160 crosses the slanted surface of the second section 242 and descends along the third section 244. At this time, the male mold 142 moves due the axial centrifugal force and is brought into close engagement with the female mold 142.

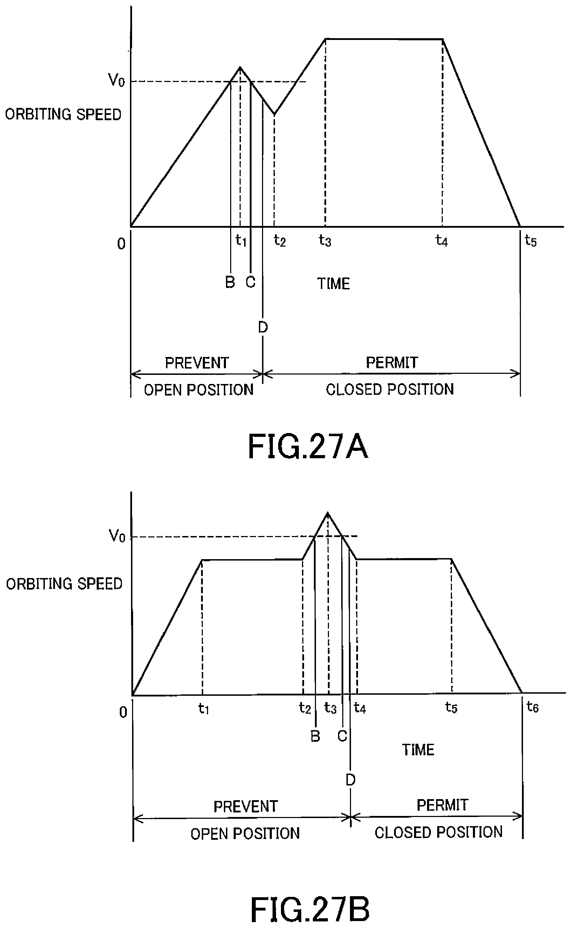

In Fig. 27A, an example of a profile of a time-varying orbiting speed of the mold unit 200, which is performed by controlling the mixer 40 without using the brake 94, is illustrated by a graph.

As illustrated in Fig. 27A, during the period from time t0 to t1, the orbiting speed increases from zero, to thereby increase the axial centrifugal force acting on the movable member 212. During this period, the orbiting speed reaches and then exceeds a threshold V0; until the point in time that the threshold V0 is reached, each guide pin 262 stays at Position A depicted in Fig. 23. When the orbiting speed exceeds the threshold V0, the axial centrifugal force acting on the movable member 212 overcomes the elastic force of the spring 280, whereby each guide pin 262 moves from Position A depicted in Fig. 23 to Position B depicted in Fig. 24.

During the subsequent period from time t1 to t2, the orbiting speed decreases, to thereby decrease the axial centrifugal force acting on the movable member 212. During this period, when the elastic force of the spring 280 overcomes the axial centrifugal force acting on the movable member 212, then each guide pin 262 will move from Position B depicted in Fig. 24 to Position C depicted in Fig. 25, with subsequent movement of each guide pin 262 to Position D depicted in Fig. 26. Before each guide pin 262 reaches a position just before Position D, a close engagement of the male mold 144 in the female mold 142 remains prohibited; when each guide pin 262 reaches the position just before Position D, the close engagement of the male mold 144 becomes permitted.

Thereafter, the orbiting speed increases from time t2 to t3, the orbiting speed is kept unchanged from time t3 to t4 and the orbiting speed decreases to zero from time t4 to t5. With that, one control cycle for the orbiting speed is concluded.

In Fig. 27B, another example of a profile of a time-varying orbiting speed of the mold unit 200, which is performed by controlling the mixer 40 without using the brake 94, is illustrated by a graph.

As illustrated in Fig. 27B, during the period from time t0 to t1, the orbiting speed increases from zero, but fails to exceed the threshold V0, resulting in each guide pin 262 staying in Position A. During the subsequent period from t1 to t2, the orbiting speed is kept constant. During the further subsequent period from t2 to t3, the orbiting speed increases again, and once the orbiting speed has exceeded the threshold V0, the axial centrifugal force acting on the movable member 212 overcomes the elastic force of the spring 280, whereby each guide pin 262 moves from Position A to Position B.

During the subsequent period from time t3 to t4, the orbiting speed decreases; once the elastic force of the spring 280 overcomes the axial centrifugal force acting on the movable member 212, each guide pin 262 moves from Position B to Position C, with subsequent movement of each guide pin 262 to Position D. Before each guide pin 262 reaches a position just before Position D, a close engagement of the male mold 144 in the female mold 142 remains prohibited; when each guide pin 262 reaches the position just before Position D, the close engagement of the male mold 144 becomes permitted.

Thereafter, the orbiting speed is kept constant from time t4 to t5 and the orbiting speed decreases to zero from time t5 to t6. With that, one control cycle for the orbiting speed is concluded.

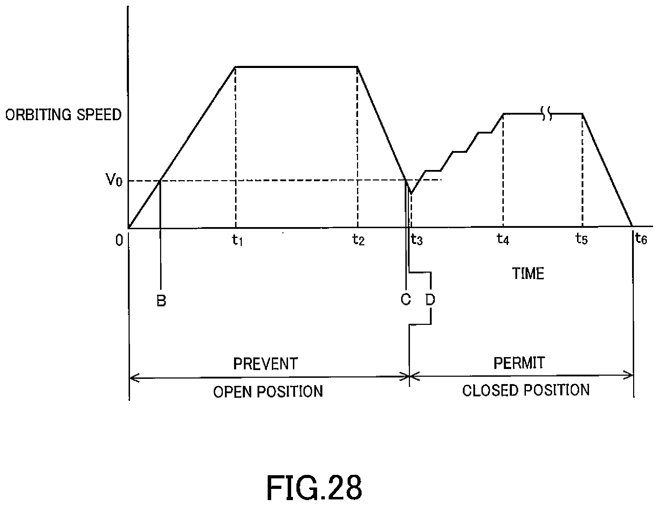

In Fig. 28, still another example of a profile of a time-varying orbiting speed of the mold unit 200, which is performed by controlling the mixer 40 without using the brake 94, is illustrated in a graph. In this example, the threshold V0 is pre-set to a speed closer to zero than those of the two preceding examples.

As illustrated in Fig. 28, during the period from time t0 to t1, the orbiting speed increases from zero; once the orbiting speed has exceeded the threshold V0, the axial centrifugal force acting on the movable member 212 overcomes the elastic force of the spring 280, whereby each guide pin 262 moves from Position A to Position B. During the subsequent period from time t1 to t2, the orbiting speed is kept constant.

During a further subsequent period from time t2 to t3, the orbiting speed decreases; once the elastic force of the spring 280 overcomes the axial centrifugal force acting on the movable member 212, each guide pin 262 moves from Position B to Position C, with subsequent movement of each guide pin 262 to Position D. Before each guide pin 262 reaches a position just before Position D, a close engagement of the male mold 144 in the female mold 142 remains prohibited; when each guide pin 262 reaches the position just before Position D, the close engagement of the male mold 144 becomes permitted. In this example, the male mold 144 is brought into close engagement with the female mold 142 more slowly than in the two preceding examples, triggered by a lesser magnitude of the orbiting speed, or a lesser magnitude of the axial centrifugal force acting on the male mold 144 than those of the preceding two examples. This prevents the male mold 144 from rushing into the material within the female mold 142 while incorporating air into the material.

During the subsequent period from time t3 to t4, the motor 50 is driven by repeating the alternating runs of the acceleration modes and the constant speed modes, to thereby increase the orbiting speed at a more gradual gradient than if the motor 50 were to be driven continuously in the same acceleration mode. As a result, the axial centrifugal force acting on the male mold 144 increases with a gradual gradient in accordance therewith, and this also is conducive to preventing the introduction of air bubbles into the material.

Thereafter, the orbiting speed is kept constant from time t4 to t5 and the orbiting speed decreases to zero from time t5 to t6. With that, one control cycle for the orbiting speed is concluded.

It is noted that, in the present embodiment, Positions B, C and D are not collinear in each second guide groove 260, but, in an alternative, Positions B, C and D may be collinear in each second guide groove 260. The reason is that, when each guide pin 262 moves from Position A to Position B, the third section 304 retracts in the rotational direction from the groove of the third section 244 of each first guide groove 232, to thereby permit each guide pin 160 to enter the third section 244 and move towards the fourth section 246 and to thereby bring the male mold 144 into close engagement with the female mold 142.

## Claims

1. A method of molding a product by rotating a mold,
the mold comprising two mold parts,
the mold configured to be selectively shifted between an open position where the two mold parts are released from each other and are not in close engagement with each other, and a closed position where the two mold parts are in close engagement with each other to form a mold cavity,
the method comprising:
(i) filling up the mold with a material;
(ii) after the mold has been filled with the material, imparting a rotary motion to the mold in the open position, thereby agitating the material while degassing it, and thereby initiating rotational molding of the product; and
(iii) after a predetermined period of time has elapsed since the rotational molding is initiated, shifting the mold from the open position to the closed position while the mold is rotating, thereby allowing the mold to define a final shape of the product.

2. The method according to Claim 1 wherein the mold comprises a female part and a male part.

3. The method according to Claim 1 wherein the material is a synthetic resin that is liquid.

4. The method according to Claim 1 wherein the rotary motion is a planetary motion.

5. The method according to Claim 1, further comprising:
(iv) after the rotational molding is completed, clamping the two mold parts to secure the mold; and
(v) heating the secured mold to cure the material within the mold cavity.

## Patentansprüche

1. Verfahren zum Formen eines Produkts durch Drehen einer Form,
wobei die Form zwei Formteile umfasst,
wobei die Form dazu konfiguriert ist, selektiv zwischen einer geöffneten Position, in der die beiden Formteile voneinander gelöst sind und nicht in engem Eingriff miteinander stehen, und einer geschlossenen Position, in der die beiden Formteile in engem Eingriff miteinander stehen, um einen Formhohlraum zu bilden, bewegt zu werden,
wobei das Verfahren Folgendes umfasst:
(i) Befüllen der Form mit einem Material;
(ii) nach dem Füllen der Form mit dem Material Beaufschlagen der Form in der geöffneten Position mit einer Drehbewegung, wodurch das Material gerührt wird, während es entgast wird und wodurch Rotationsformen des Produkts eingeleitet wird; und
(iii) nach Ablauf einer vorbestimmten Zeitspanne seit Einleiten des Rotationsformens Bewegen der Form aus der geöffneten Position in die geschlossene Position, während die Form gedreht wird, wodurch die Form eine Endform des Produkts definieren kann.

2. Verfahren nach Anspruch 1, wobei die Form einen Negativteil und einen Positivteil umfasst.

3. Verfahren nach Anspruch 1, wobei das Material ein synthetisches Harz ist, das flüssig ist.

4. Verfahren nach Anspruch 1, wobei die Drehbewegung eine planetarische Bewegung ist.

5. Verfahren nach Anspruch 1, ferner umfassend:
(iv) nach Beendigung des Rotationsformens Festklemmen der beiden Formteile zum Fixieren der Form; und
(v) Erwärmen der fixierten Form zum Aushärten des Materials in dem Formhohlraum.

## Revendications

1. Procédé de moulage d'un produit par rotation d'un moule,
le moule comprenant deux parties de moule,
le moule étant configuré pour être déplacé de manière sélective entre une position ouverte dans laquelle les deux parties de moule sont détachées l'une de l'autre et ne sont pas en prise étroite l'une avec l'autre, et une position fermée dans laquelle les deux parties de moule sont en prise étroite l'une avec l'autre pour former une cavité de moule,
le procédé comprenant :
(i) le remplissage du moule avec une matière ;
(ii) après le remplissage du moule avec la matière, l'application d'un mouvement de rotation au moule dans la position ouverte, pour ainsi agiter la matière tout en la dégazant, et pour ainsi amorcer le moulage par rotation du produit ; et
(iii) après une période de temps prédéterminée après l'amorçage du moulage par rotation, déplacement du moule de la position ouverte à la position fermée pendant la rotation du moule, pour ainsi permettre au moule de définir une forme finale du produit.

2. Procédé selon la revendication 1, dans lequel le moule comprend une partie femelle et une partie mâle.

3. Procédé selon la revendication 1, dans lequel la matière est une résine synthétique sous forme liquide.

4. Procédé selon la revendication 1, dans lequel le mouvement de rotation est un mouvement planétaire.

5. Procédé selon la revendication 1, comprenant en outre :
(iv) après le moulage par rotation, le serrage des deux parties de moule pour fixer le moule ; et
(v) le chauffage du moule fixé de manière à durcir la matière à l'intérieur de la cavité du moule.
